# EUROPEAN PATENT SPECIFICATION

(11) **EP 3 860 731 B1**
(45) Date of publication and mention of the grant of the patent: **14.12.2022**
(21) Application number: 19795366.4
(22) Date of filing: 30.09.2019
(51) Int. Cl.: G01S 13/02, G01S 13/86, G01S 13/88, G01S 7/00, G01S 7/02, G01S 7/41, A63C 11/00, A63C 5/06, A63C 5/12

(54) **METHOD, DEVICE AND SYSTEM FOR SNOW PROFILE MEASUREMENT**
VERFAHREN, VORRICHTUNG UND SYSTEM ZUR SCHNEEPROFILMESSUNG
PROCÉDÉ, DISPOSITIF ET SYSTÈME DE MESURE DE PROFIL DE MANTEAU NEIGEUX

(30) Priority: 01.10.2018 NO 20181273
(43) Date of publication of application: 11.08.2021
(73) Proprietor: THINK OUTSIDE AS, 5096 Bergen (NO)
(72) Inventor: VAKSDAL, Monica, 5238 Rådal (NO); NESSE, Kjartan, 5236 Rådal (NO); KARLSEN, Deborah, 0349 Oslo (NO); HOLLANDE, Tristan, 0851 Oslo (NO); LANDSCHULZE, Marcus, 5107 Salhus (NO)
(74) Representative: Zacco Norway AS
(86) International application number: PCT/NO2019/050201
(87) International publication number: WO 2020/071919

(56) References cited:
- DE-A1- 19 725 904
- DE-A1-102016 010 826
- US-A1- 2011 298 647
- US-B1- 6 312 016

## Description

### TECHNICAL FIELD

The present invention relates to avalanche risk assessment. In particular, the invention relates to ground penetrating radar devices attached to or integrated in skis or other types of equipment designed for travel in or on snow, methods for using such devices to obtain information about snow conditions, and systems for aggregating, processing and distributing information collected from such devices.

### BACKGROUND

Thousands of avalanches take place worldwide during a typical skiing season, and they claim more than 150 lives worldwide every year. In addition, there are material damages for example to snowmobiles and buildings, as well as losses caused by roads being closed, and terrain being made unavailable for travel or recreation. With the growing popularity of off-piste (backcountry skiing), ski mountaineering, and other activities away from the controlled environment of ski resorts, accidents associated with avalanches and other snow conditions may increase in frequency.

Snow avalanches occur as a function of wind and weather, the terrain's inclination and the instability of the snow layers. Avalanches can be naturally triggered by wind, weight added by snowfall, and temperature changes and can be triggered by the weight, movement or vibration of skiers or all-terrain vehicles and snowmobiles going up or down a mountainside.

Today, an off-piste skier can check the snow layers by digging a snow profile to get a cross section of the snow cover and make a qualitative assessment of the snow layers stability. The method has its weaknesses: it is time consuming, it can be risky (it is not recommended to dig snow profiles in steep or unstable terrain), and it can be difficult to interpret the results for people who are not experts or have had specialized training. Market research has shown that less than 20% of backcountry skiers feel comfortable digging and interpreting a snow profile and less than 10% regularly assess the snow layers by digging snow profiles.

Related situations that require examination of snow and ice below the surface may not be directly associated with avalanche risk. Examples include examination of ice thickness and quality on frozen lakes and thickness and quality of permanent snow in Arctic and Antarctic regions, on glaciers and the like. Such situations are also usually handled by digging or drilling holes and examining a cross section at a single location.

In view of this situation, it is desirable to find ways of providing skiers with information that can help them reduce their exposure to the risk of triggering or being caught in avalanches. If they are in possession of sufficiently high quality information, skiers may modify their route, avoid making stops in risky areas for non-critical activities such as taking pictures, drinking water, adjusting clothing, etc., increase the security distance between members of their group, or they may decide to dig new snow profiles if information indicates that conditions may have changed.

Ground Penetrating Radar (GPR) fixed on moving antenna constructions such as sledges, GPR fixed on stationary installations placed under the snow, Ultra-Wide Band (UWB) radar mounted on drone or movable antenna slings, and various radar or Doppler installations are currently utilized in academic (skid, climate) research and for commercial purposes (ski resorts) for measuring and monitoring snow layer thickness. None of the existing solutions are small or light enough to be used for large commercial market purposes, and in addition, there are no good processing and visualization solutions that allow radar-induced data on snow layers to be used by skiers or other people while they are moving in snowy terrain.

Consequently, there is a need for solutions that can provide skiers and others with data related to snow conditions and improve the quality of the data that are already available to them.

### SUMMARY OF THE DISCLOSURE

The innovation contributes to simplification of risk assessment associated with avalanche for skiers and others that move in terrain where avalanches may occur. The invention makes this contribution through further development of radar technology by combining antenna design, data acquisition and data visualization in a completely new way wherein a GPR device is mounted on or embedded in the ski or other equipment that is in contact with the snow during use and enable viewing of the provided data results in real-time using, for example, indicators or buzzers on the GPR device itself, as well as connected smartphones, smart watches and goggles. Furthermore, the acquired data sets can be shared with others in a way that not only makes the data available to more people, but also improves the quality of the available information. By connecting the obtained snow layer information with other available information including slope angle measurements, topography, weather, historical avalanche information and more, the invention aims at contributing to a significant reduction in accidents involving people. The invention contributes to collection of large amounts of data regarding snow conditions without investment in infrastructure and equipment and without requiring that experts be sent into the field to obtain snow data and make assessments. The information can be collected over large areas and from remote locations since the only requirement is that someone equipped with a device according to the invention actually skis through the area.

### BRIEF DESCRIPTION OF THE DRAWINGS

In order to facilitate understanding of the invention and explain how it may be worked in practice, non-limiting examples will be described with reference to the accompanying drawings, in which:
FIG. 1 shows a skier utilizing an embodiment of the invention on a slope;
FIG. 2 shows several skiers utilizing an embodiment of the invention wherein alerts can be transmitted between devices;
FIG. 3 shows an overview of a system according to an embodiment of the invention;
FIG. 4 is a block diagram of an embodiment of a device according to an embodiment;
FIG. 5 shows an antenna component that can be used with embodiments of the invention;
FIG. 6 illustrates how a ski can be prepared to receive an antenna component;
FIG. 7a-d are illustrations of how antenna components and devices can be embedded in or mounted on skis according to different embodiments;
FIG. 8a-b shows a removable device and an associated holder according to an embodiment;
FIG. 9 shows a personal device with a display showing data provided by an embodiment of the invention;
FIG. 10 is a flowchart illustrating how data may flow and be processed in a system according to the invention;
FIG. 11a-b illustrate how data can be processed locally on a device;
FIG. 12 shows an embodiment of a process for cloud based processing of data;
FIG. 13 shows an embodiment of cloud based machine learning in greater detail; and
FIG. 14 shows an embodiment of cloud based parameter generation and avalanche risk assessment in greater detail.

### DETAILED DESCRIPTION

In the following description of various embodiments, reference will be made to the drawings, in which like reference numerals denote the same or corresponding elements. The drawings are not necessarily to scale. Instead, certain features may be shown exaggerated in scale or in a somewhat simplified or schematic manner, wherein certain conventional elements may have been left out in the interest of exemplifying the principles of the invention rather than cluttering the drawings with details that do not contribute to the understanding of these principles.

It should be noted that, unless otherwise stated, different features or elements may be combined with each other whether or not they have been described together as part of the same embodiment below. The combination of features or elements in the exemplary embodiments are done in order to facilitate understanding of the invention rather than limit its scope to a limited set of embodiments, and to the extent that alternative elements with substantially the same functionality are shown in respective embodiments, they are intended to be interchangeable. For the sake of brevity, no attempt has been made to disclose a complete description of all possible permutations of features.

Furthermore, those with skill in the art will understand that the invention may be practiced without many of the details included in this detailed description. Conversely, some well-known structures or functions may not be shown or described in detail, in order to avoid unnecessarily obscuring the relevant description of the various implementations. The terminology used in the description presented below is intended to be interpreted in its broadest reasonable manner, even though it is being used in conjunction with a detailed description of certain specific implementations of the invention.

The present invention provides several aspects that can be combined into a system for improved monitoring and warning of snow conditions that may represent a risk of avalanches. The first aspect relates to the way data about snow conditions may be obtained, while additional aspects relate to aggregation of such data, processing of aggregated data, and sharing of processed data.

With the exception of structural details that are specifically developed for a particular type of equipment, for example devices or antennas adapted for integration in skis, the devices and methods described herein are adaptable for use with a wide range of equipment including not only skis, but also snowboards, snow shoes, ski poles, snowmobiles, all-terrain vehicles (ATVs), snowcats, snow groomers, and even boots and shoes or remote operated vehicles (ROVs). For ease of understanding, the examples described herein will primarily describe embodiments where GPR devices are mounted on or integrated in skis, but the examples may be generalized to other types of equipment.

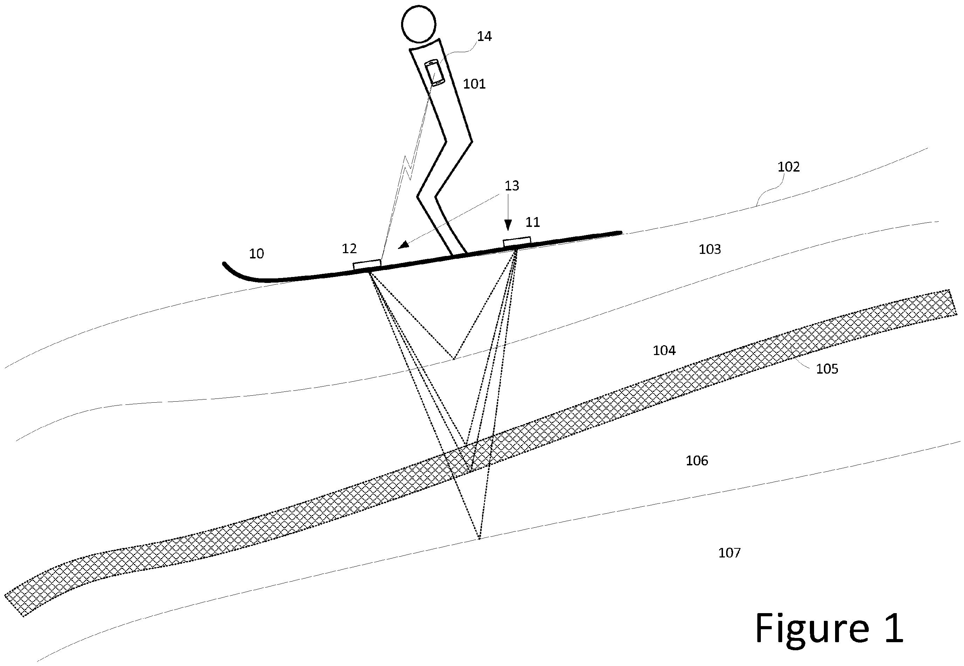

Reference is first made to FIG. 1, which shows a skier 101 on a slope 102, which includes several layers of snow. The layers may represent different qualities of snow. For example, the top layer 103 may be a layer of newly fallen powder snow. Below this layer may be a layer 104 of for example packed powder or corn snow. Yet another layer 105 may be hoar frost covering another layer 106 of, for example, corn snow, above a layer 107 of icy crust.

These layers can be examined in detail by digging a snow profile, which is a time consuming process that can only be performed in order to obtain general information about an area or specific information about a particularly risky hillside. It is not practical or realistic for skiers to dig new snow profiles every time they move into new terrain, and many skiers lack the necessary skills to draw the right conclusions even if they do dig a snow profile.

The skier 101 shown in FIG. 1 has skis 10 that are provided with one ground penetrating radar (GPR) transmitter 11 and a corresponding receiver 12. The GPR transmitter 11 transmits electromagnetic signals downward into the layers of snow, and the signal is reflected at the boundaries between layers. The reflected signals are received by the receiver 12. In some embodiments, the signals are processed in the receiver 12, and it is consistent with the principles of the invention to include components that are capable of issuing a warning directly from the receiver 12, for example in the form of lights or a display. The receiver 12 may also include a transmitter that is capable of connecting with other similar devices within range or with a communication network, for example a cellular network, in order to upload received or processed data to a remote location. In the embodiment illustrated in FIG. 1, however, the receiver 12 is in short range communication with a device carried by the skier 101. This portable device may, for example, be a smartphone 14. The smartphone 14 may receive raw or processed data from the receiver 12. An application may be installed on the smartphone 14 for further processing of the received data, and for display of information to the skier 101 or upload of data to a remote location. The portable device 14 may also be a dedicated device designed for this specific purpose, a smart watch, smart glasses, or some other user device with the ability to receive GPR data, handle such data, and present data to a user.

The transmitter 11 and the receiver 12 may be implemented as a single device or as two units mounted on different locations on a ski 10. For the purposes of the present disclosure, the combined transmitter 11 and receiver, 12 will be referred to as a GPR device and this term is intended to cover both alternatives. As such, a GPR device 13 may comprise a GPR transmitter 11 and a GPR receiver 12 implemented as a single unit, or a GPR device 13 may comprise one GPR transmitter 11 unit and one GPR receiver unit 12. Furthermore, the computing capabilities carried by the skier 101 may be implemented solely in the GPR device 13, or it may be distributed between the GPR device 13 and a portable device 14. In the present disclosure, unless otherwise specified, reference to communication between a GPR device 13 and a remote server is intended to cover any combination of processing of data in the GPR device 13 or by an application on the portable device 14 prior to exchange of data with the server.

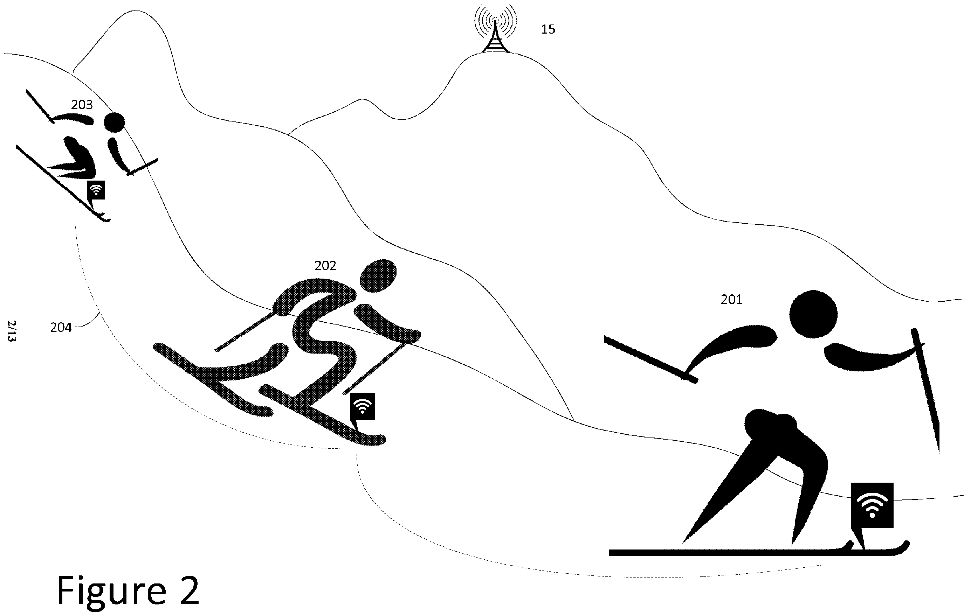

Reference is now made to FIG. 2, which shows how some embodiments of the invention allow several skiers equipped with similar GPR devices to take advantage of data obtained by other skiers than themselves. It is consistent with the principles of the invention to provide GPR devices 13 according to the invention with short range broadcasting capabilities, for example based on a beacon standard such as iBeacon, Eddystone, URIBeacon or AltBeacon. This makes it possible to alert skiers within range of an immediate danger. This is illustrated in the drawing as the dashed lines 204 between skiers 201 and 202, and between skiers 202 and 203. As an alternative to short range broadcast, addressed communication between devices that have already been paired, for example using Bluetooth, is also possible. It is also consistent with the invention to use long range radio for direct communication with other devices, for example by using LoRa.

Furthermore, as mentioned above a GPR device 13 according to the invention may be provided with Bluetooth or other short-range communication capabilities enabling communication with a portable device 14 carried by the skier for further processing of data and display of rich information to the skier on a display of the device 14. The portable device 14, or the GPR device 13 itself, may also be provided with wide area communication capabilities able to establish communication with e.g. a cellular base station 15 for upload of data to a remote server. Such communication may, for example, be based on 4G/5G or LoRa-WAN, which are well known to those with skill in the art. When communication between the GPR device and a remote server is referred to in the present disclosure, this is intended to cover direct communication from the GPR device itself as well as communication between the portable device 13

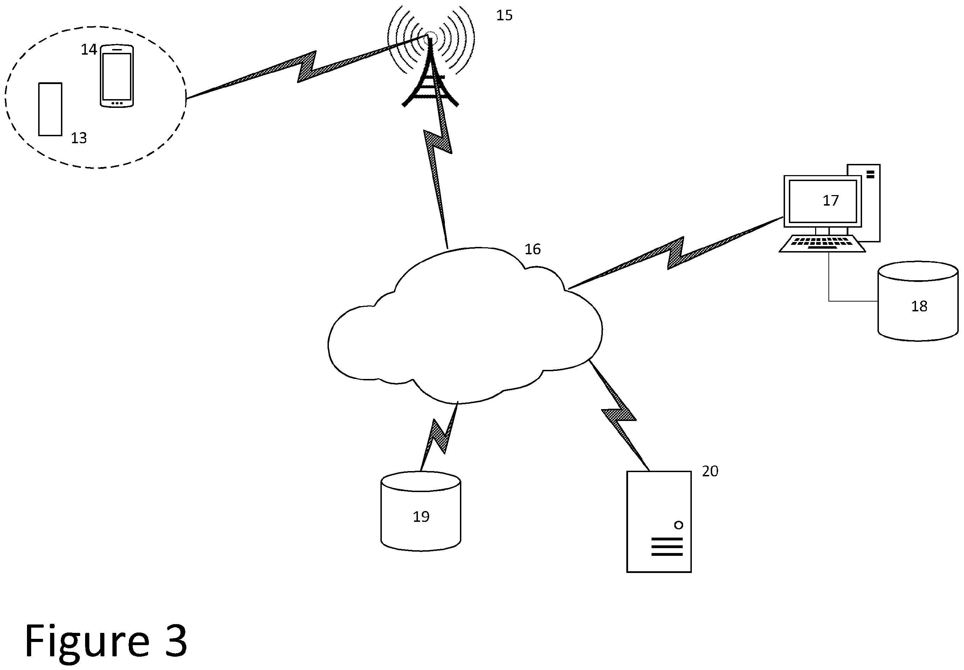

FIG. 3 is an illustration of a system according to an embodiment of the invention. The system includes a GPR device 13 in combination with a portable device 14 (collectively they will be referred to by reference to the GPR device 13 alone). The GPR device 13 is in communication with a base station 15 which provides connection with a wide area communication network. The wide area network (WAN) may be a combination of networks, for example cellular networks and the Internet. A back end server 17 is also connected to the network 16. The back end server may be implemented on more than one computer, and they do not have to be located at the same physical location. The back end server 17 may be connected to a database 18 where it stores data received from GPR devices 13. Thus, the back end server 17 may have immediate access to a vast amount of real time data obtained from skiers that are currently out skiing as well as historical reaching back in time. In addition, the back end server 17 may have access to a variety of data repositories 19 (only one is shown in the drawing) which may provide relevant data such as real time and historical weather data (wind, temperature, humidity, precipitation, barometric pressure, sunshine, clouds, etc.), historical snow conditions, avalanche risk areas, etc.

It should be realized that the short range communication between GPR devices 13 illustrated in FIG. 2 and the uploading and downloading of data between GPR devices 13 and a back end server 17 shown in FIG. 3 may be alternatives in the sense that an embodiment of the invention may implement one or the other in order to provide information from one skier to another, or they may be complementary in the sense that for example immediate alert signals are broadcast using the short range (or long range) broadcast capability (or addressed communication) illustrated in FIG. 2 and all other data is uploaded, aggregated and downloaded by many skiers in the same area using the capabilities illustrated in FIG. 3.

The back end server 17 may implement a service where data is transmitted back to the GPR device 13 in order to enhance the information available to the skier. The back end server 17 may also provide additional web services, for example by serving web pages including maps where avalanche risk is indicated.

The back end server 17 may thus access data available from the cloud and it may implement or otherwise utilize one or more machine learning algorithms or strategies in order to recognize patterns and extract information from these large datasets. The machine learning strategies may be implemented on the back end server 17 itself, or they may be available as cloud services from centralized servers 20. Examples of such services include Microsoft's Azure and Google's Cloud Machine Learning Engine.

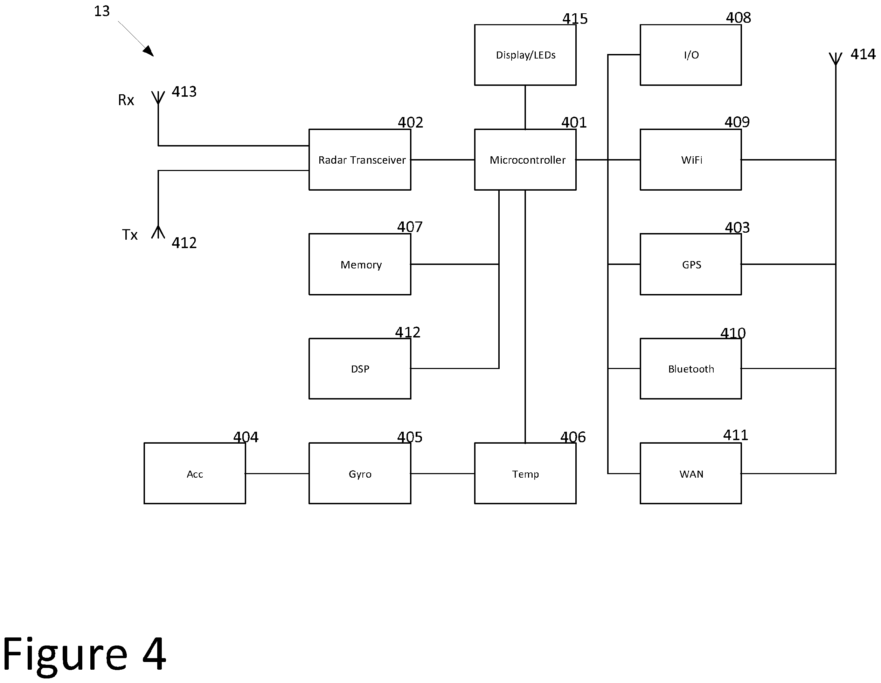

Having thus described the overall functionality and structure of the system as a whole, a more detailed description of the GPR device will now be given with reference to FIG. 4, which is a block diagram showing the architecture of the electronic components in the GPR device 13.

The central component of the GPR device is a low power microcontroller 401. The microcontroller 401 is connected to and controls multiple sensors. The multiple sensors may include a radar transceiver 402, a GPS receiver 403, an accelerometer 404, a gyroscope 405 and a temperature sensor 406. Some embodiments may only have a subset of these sensors, and additional sensors may be included, for example a tiltmeter, and an electronic compass. No attempt will be made to explicitly list all possible configurations of sensors that may be included. Any sensor that provides data that may be obtained from other sources or is considered unnecessary may be omitted in a particular embodiment, as a design choice that may be made by a systems designer. For example, positioning information may be obtained from a GPS receiver included in the portable device 14.

The micro controller 401 could be used in conjunction with a component dedicated to machine learning, such as a co-processor optimized for pattern recognition (Google Edge TPU, Nvidia GPU, Intel^{®} Movidius^{™} Myriad^{™} VPU). This component may then be used to implement pattern recognition algorithms locally (i.e. in the GPR device 13) in manner that is simpler in terms of development cost and complexity. This may also contribute to faster response and lower power consumption.

The GPR device 13 may further include local memory 407 where data may be stored temporarily or permanently by the microcontroller. The local memory 407 may be implemented in any suitable memory technology known to those with skill in the art. Typically a flash memory technology may be selected, for example Secure Digital (SD) or eMMC.

The GPR device 13 is furthermore provided with communication interfaces. In the exemplary embodiment illustrated in FIG. 4 these interfaces include an I/O circuit which may be an USB interface. The presence of a physical port may be useful for example for software upgrades, battery charging, and as an alternative for access to data stored in local memory 407.

Wireless communication interfaces may include WiFi 409, Bluetooth 410, and a communication capability able to establish WAN communication, for example a cellular (mobile phone) standard.

Depending on the computational power of the microcontroller itself and the amount of signal processing performed locally by the GPR device 13, a digital signal processor (DSP) 412 may also be included.

The GPR device 13 will also include antennas. The radar transceiver 402 is connected to one transmitting antenna 412 and one receiving antenna 413. These antennas will be described in further detail below. The GPS receiver 403 and the radio communication modules 409, 410, 411 will also be connected to one or more antennas 414.

Some embodiments of the GPR device 13 may also include some kind of user interface 415 for output of alerts or other information to the user, for example in the form of a small display, LEDs, audible alarms, and also buttons or switches for turning the device on and off or changing modes of operation. The user interface 415 will hereinbelow also be referred to as a risk assessment indicator 415, but this should not be interpreted to exclude the possibility of outputting other information than risk assessments over the user interface 415. In some embodiments the user interface 415 on the GPR device 13 includes two LEDs. One of these LEDs, when lit or of a specific color e.g. red, may then indicate that the steepness of the slope is above a certain threshold value, for example 30°. The other LED, when lit, may indicate that the risk assessment resulting from the processing of the radar data, as will be discussed further below, is above a certain level. If both LEDs are lit, this may be taken as an indication that the risk of an avalanche is high and that the user should move to a safer area. If only the LED indicating risk based on radar data (e.g. detected presence of a weak snow layer) is indicating danger, this can be interpreted as a warning against moving into steeper areas and a warning to look out for other skiers higher up that may trigger an avalanche.

In addition to the components described above, the GPR device 13 will also include a number of additional components that are not shown in the drawing because they are well known by people with skill in the art. Such components include a power source, for example a chargeable or replaceable battery, a system clock, communication buses, and antenna impedance compensation circuits. The battery, or any other power source included in a GPR device 14 according to the invention, should, of course, be capable of operating at cold circumstances.

The radar transceiver 402 is controlled by the microcontroller 401 to operate in a manner similar to methods used in seismic exploration, with a source emitting a transmitted signal and a receiver recording a received signal that is the result of reflection of the transmitted signal by the layers of the snow at various depths.

In seismic exploration, the source signal is acoustic or elastic waves that penetrate to substantial depths of the Earth's crust. The present invention, however, is designed to penetrate to a maximum depth of approximately 10 meters into layers of snow and transformed snow. The invention therefore uses high frequency electromagnetic waves transmitted and received by radar antennas 412, 413 that can be attached to or fitted inside a ski, preferably without affecting its robustness and with a minimum of adverse impact on manufacturing.

The radar transceiver 402 may be a microwave radar system integrated on a single CMOS chip that can act as ground-probing radar. Such a radar transceiver can be manufactured with a small size, low power consumption, and as a System-On-Chip (SoC) device. An example of such a chip is XeThru (XeThru is a trademark) which is an SoC device with small size and low power consumption. The availability of this device, which is made by Novelda AS of Kviteseid, Norway) made it possible to test aspects of the invention very early in the development project and therefore prove the viability of the concept very early. Google Soli is another alternative, as is The MIT Lincoln Laboratory Localizing Ground-Penetrating Radar (LGPR)

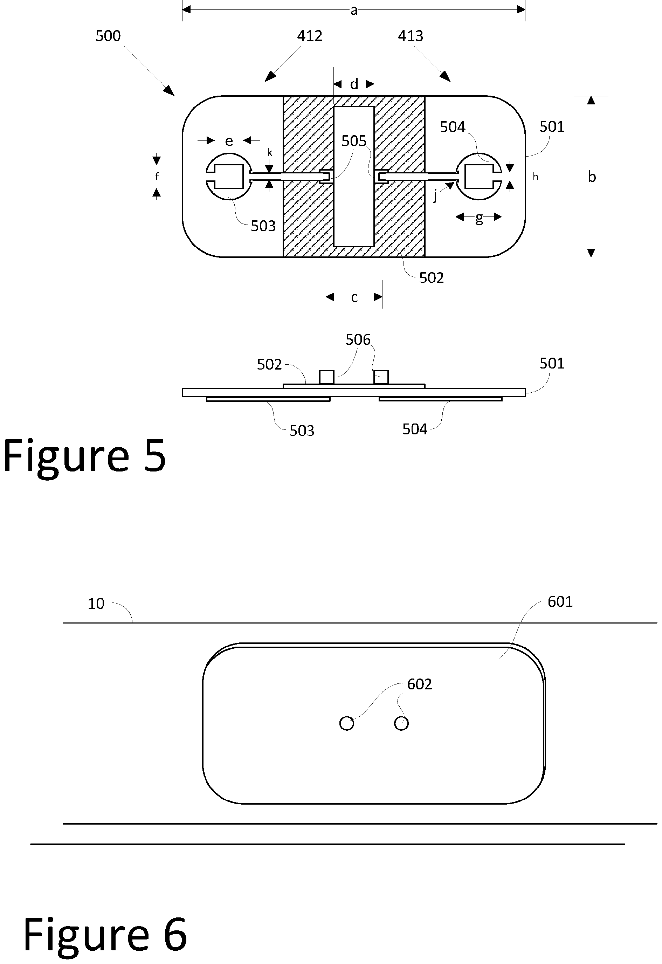

An exemplary embodiment of the transmitting antenna 412 and receiving antenna 413 is shown in FIG. 5. The embodiment shown in this drawing includes a single antenna component 500 with a dielectric substrate 501. A conductive ground plane 502 is provided on one side of the substrate 501. On the other side of the substrate 501, a first and a second antenna pattern 503, 504 are provided. The conductive ground plane 502 and the antenna patterns 503, 504 may be made of copper, or some other suitable metal or alloy. The substrate 501 may be made from epoxy resin, but again alternatives are known to those with skill in the art. Solder pads 505 are provided for connecting the antenna patterns to wires or other conductors providing connection with the microcontroller 401, directly or via antenna impedance circuits and other circuitry.

The drawing in FIG. 5 is not to scale. The following dimensions, which are all given in millimeters, are according to an exemplary embodiment and based on a radar signal frequency in the range of 3GHz to 10GHz, typically with a bandwidth of 2GHz.
a: 120
b: 20
c: 17.0
d: 10.0
e: 12
f: 10
g: 20
h: 3.5
j: 0.75x0.75
k: 2.8
It is, however, consistent with the principles of the invention to design antennas with other dimensions, including for the use with other frequencies, and to provide the transmitting antenna 412 and the receiving antenna 413 on separate substrates, for example in order to position them further apart on the ski 10.

FIG. 5 also shows a side view of the same component. The side view shows the substrate 501, the ground plane 502 and the transmitting and receiving antenna patterns 503, 504. In addition, two connectors 506 are shown. These connectors are connected to the solder pads 505 and they are configured to receive the wires, conductors or cables that connect the antenna to the electronics when the antenna component 500 is embedded in the ski or, alternatively, attached to the base of a ski, and the GPR device 13 is mounted on the top of the ski. The thickness of the conductive layers are exaggerated in this drawing. The layers are very thin, and they may be protected with coating in order to protect them from being damaged and, in embodiments where the antenna component 500 is attached to the base of the ski, from creating friction when the ski glides on top of the snow. Conformal coating, typically a fine polymeric film, can be applied to the antenna component in order to protect it from the environment. Example of conformal coating material are IPC A-610, IPC-CC-830, parylene and Silicone

The antenna patterns 503, 504 are directed downwards toward the snow, while the ground plane 502 and the connectors 506 are directed upward.

In some embodiments of the invention, the antennas and in some cases also the GPR electronics, may be embedded in the ski when the ski is produced. However, other embodiments are configured for being retrofitted. With the configuration of the antenna shown in FIG. 5 this can be done without substantial structural changes or damage to the ski.

This gives the following combinations, all of which are consistent with the principles of the invention. First of all it is possible to integrate both the antenna component 500 and the GPR device 13 in the ski. It may be necessary to provide the antennas 414 for GPS reception and wide area network communication on the outside of the ski, or they may be embedded just below the top surface of the ski. This embodiment may require that a rechargeable battery can be wirelessly charged or that the ski is provided with a connector for charging. Secondly, all components may be provided on the outside of the ski. The simplest embodiment representing this alternative is one where all components are provided in one unit which is mounted on the top of the ski. However, it is also possible to distribute components between several units, for example one or more antennas and one or more units containing the electronics. A third alternative is to embed the antenna component 500 in the base or core of the ski and mount the GPR device 13 including external antennas 414 on the top of the ski. The GPR device 13 may according to this alternative either be permanently mounted, or it may be releasably mounted to the top of the ski. Again it is possible to distribute functionality between several units. One possibility is to include some electronics in a holder that is permanently attached to the ski 10 and additional electronics in a device that may be removed from the ski and transferred to another ski with another, similar holder. For example, the radar transceiver may be placed in the permanently attached holder, removing the need for high frequency radio signals to be transmitted over a releasable connector between a removeable device and a permanently attached holder. Such a connector may be worn or exposed to ice, snow and water, which may cause reflections that will corrupt the radar signal.

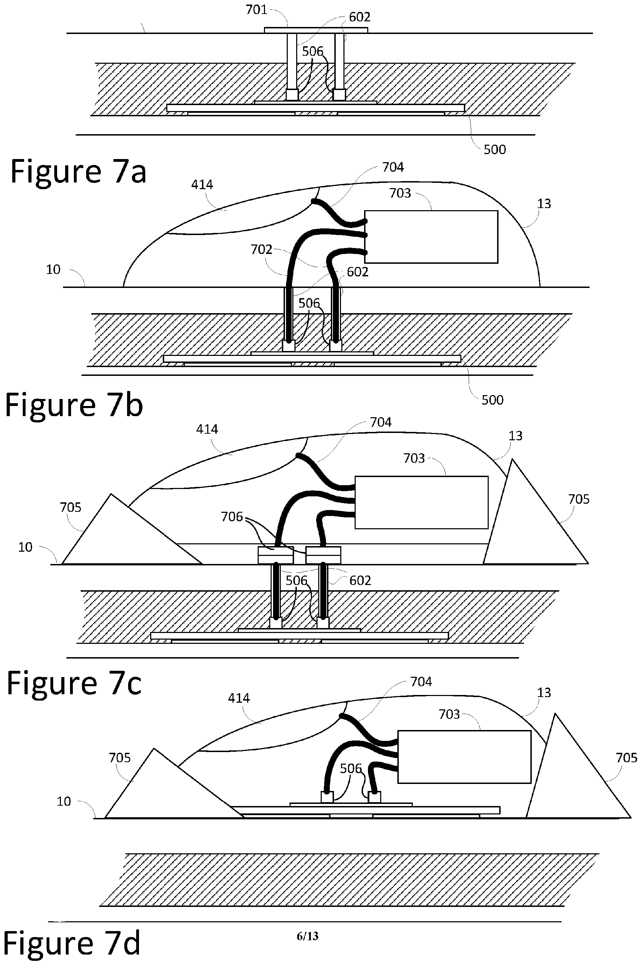

Embodiments representing some of the alternatives mentioned above will now be described with reference to FIG. 6 and FIG. 7.

FIG. 6 is an illustration of how a ski 10 can be prepared for receiving the antenna component 500 illustrated in FIG. 5.

The core or the base of a ski 10 has been provided with a recessed area 601 with substantially the same shape and size as the substrate 501. This may for example be done with a milling machine. In addition, two holes 602 have been made such that they are able to receive the connectors 506 and that a connector, wire or cable can pass through them and connect them to the GPR device on the other side of the ski.

In embodiments where the antenna is embedded in the ski 10 the recessed area 601 and the holes 602 are provided in the core of the ski. In embodiments where the antenna is embedded in the base of the ski 10 after the ski has been produced, the recessed area 601 is milled into the base and the holes are 602 are drilled all the way through the ski 10.

In either case, the antenna component 500 is glued into the recess 601. This will position the antennas 412, 413 as close to the snow as possible, either in direct contact with the snow if the antenna component 500 is embedded in the base, or with only the base separating the antenna component 500 from the snow if the antenna component 500 is embedded in the core.

In some embodiments, the ski 10 is provided with an embedded antenna during production, but the GPR device 13 is not provided with the ski. The embedded antenna does not add any substantial costs to the ski 10, but the GPR device 13 is comparatively much more costly and may not add any value to persons who only ski where there is no avalanche risk whatsoever. In these embodiments, it is unnecessary to drill holes through the layers on top of the core. Instead, a metal cylinder (not shown) fitting each hole 602 may be placed inside the holes such that they establish inner walls of the holes. This may be done for two reasons, namely in order to guide the drill bit when the hole is completed from the top of the ski through the layers above the core in order to provide access to the connector. The metal cylinders may also help prevent an excess of glue from moving up through the hole, something that may deteriorate the connector.

If the antenna is embedded in the ski during production, once it has been glued in position in the recess 601, the remaining production steps of adding all the layers around the core remain unchanged.

In one embodiment, the antenna component is embedded in the ski and markings are printed on the top layer of the ski indicating where the connectors 506 are positioned. Holes can then be drilled through the top layers and down towards the connectors at a later time if and when it is desirable to mount a GPR device 13 on the ski 10.

A similar embodiment is illustrated in FIG. 7a, but in this embodiment, holes 602 are drilled through the top layers as part of the production process and the ski 10 is provided with a plate or socket 701 covering the holes. This plate or socket 701 should have removable elements, for example, a plate or plugs, that prevent the holes from being filled with snow, ice and water during use. If and when it is desirable to mount a GPR device 13 on a ski 10 according to this embodiment, the plate and plugs are removed to expose the connectors 506 and the GPR device 13 is connected to the connector and attached to the top of the ski. The plate or socket 701 may be made of metal, plastic or some other suitable material. The removable elements may be of transparent plastic in order to provide a window through which the connectors 506 are visible. The plate or socket 701 may itself be the removable element. The connectors 506 may be RF connectors such as micro coaxial connectors (MCX), SMC or SMA.

The embodiment shown in FIG. 7b may be provided either as a result of mounting the GPR device 13 during production, or of permanently attaching the GPR device 13 subsequent to drilling of holes from the top or removal of the plate 701 shown in FIG. 7a. The GPR device 13 may be attached to the top of the ski 10 with glue, screws, or any other convenient manner. The wires, conductors or cables 702 are inserted into the connectors 506 prior to the permanent attachment of the GPR device 13 to the ski 10. The attachment of the GPR device 13 to the ski 10 may be performed at a late stage in the production process of the ski, or it may be an aftermarket installation for which the ski 10 has been prepared. The electronic components 703 shown in FIG. 4 and the external antenna 414 are also shown. The external antenna 414 may be connected to the electronic components 703 with a coaxial cable 704.

The embodiment in FIG. 7c is similar to the embodiment in FIG. 7b, except that only a device holder 705 with contacts 706 are permanently attached to the ski 10. (The holder 705 and contacts 706 are illustrated only as shapes in order to illustrate the principle. No attempt is made to give them a realistic shape in the drawing. The same applies, to a certain extent, to all parts illustrated in FIG. 7.) According to this embodiment, external connectors or contacts 706, which may be part of or associated with the holder 705, are connected to the connectors 506 embedded in the ski 10. The holder 705 can be configured to receive and hold a GPR device 13 and provide the GPR device with the necessary connection to the antenna component 500 through the contacts 706, while at the same time allowing the GPR device to be easily removed from the ski and moved to another ski. The internal components of the GPR device 13 are the same as in the embodiment illustrated in FIG. 7b. However, it is consistent with the principles of the invention to include electronic components in the holder 705, in which case the contacts 706 include a digital interface and possibly not a radio frequency interface. This will be described in further detail below.

In other embodiments of the invention, the antenna component 500 is not embedded in the ski 10. Instead, it is integrated in the GPR device 13. The antenna component 500 illustrated in FIG. 5 will have a substantially similar design, but the component will be facing downwards toward the top surface of the ski 10 when the GPR device 13 is mounted on the ski, as shown in FIG. 7c. In this embodiment, there are no components embedded in the ski and no structural changes are made to the ski. Instead, all components are embedded in the GPR device 13. Alternatively, components may be distributed between the GPR device 13 and the holder 705.

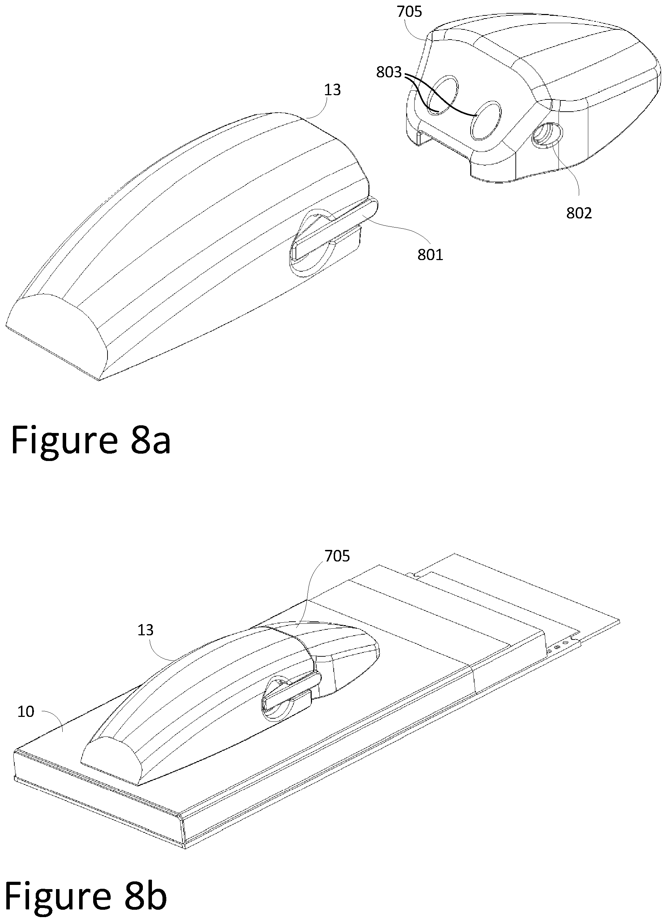

Reference is now made to FIG. 8, which shows an embodiment of a GPR device 13 and a corresponding holder 705. In FIG. 8a the two parts are separated. The GPR device 13, which may hold all or some of the components illustrated in FIG. 7, includes a locking mechanism 801 that is configured to mate with corresponding holes 802 on the holder 705. The holder also includes holes 803 that may hold the contacts 706 shown in FIG. 7. Corresponding contacts may protrude from the GPR device 13 such that when the GPR device 13 are connected to the holder 705 mating contacts 706 on the GPR device 13 and the holder 705 are connected and the locking mechanism 801 engages with the holes 706 in the holder.

FIG. 8b shows the GPR device 13 and the holder 705 when they are connected and mounted on a ski 10.

As already described above, all electronic components may be embedded in the GPR device 13, or some components may be embedded in the holder 705. Examples of components that may be included in the holder 705 are the radar transceiver 402 and associated radio frequency components, possibly as a system on a chip (SOC). In this case the connectors 706 between the GPR device 13 will be a single digital interface and no radio frequency interface. Depending on how components are distributed between the holder 705 and the GPR device 13 the connectors or contacts 706 may include both a digital and a radio frequency interface.

It should be noted that for the sake of convenience the removable component is referred to as the GPR device 13 also with reference to embodiments where the actual radio frequency components are all included in the holder 705. The GPR device 13 will still include the microcontroller 401, the memory 407, and other components that control the radar transceiver 402 and that process data received from the radar transceiver. The term GPR device 13 is therefore not limited to devices that actually include radio frequency components, but also include devices that are configured to control radio frequency components.

When determining which components to include in a removable GPR device 13 it will typically be relevant to consider cost of the components in order to be able to reuse expensive components on several pairs of skis, and also to consider data portability in order to be able to accumulate data in one device and based on configuration made on one device, as well as the ability to connect the removable device to a computer for data transfer and configuration.

Having thus described embodiments representing exemplary designs of the physical and electronic configuration of the devices carried by a skier, a description of the operation of the GPR radar and corresponding signal processing will be presented.

Returning first to FIG. 1, it can be seen how radar pulses transmitted downwards by a GPR transmitter 11 is reflected by various layers and received by the GPR receiver. The radar pulses are transmitted as a beam with a spread that depends on the exact configuration of the transmitting antenna and the frequency and wave shape of the radar pulse. This as well as further spreading in the snow and from the different layer transitions means that the reflected pulse will be distorted when it is received. However, the front of each received reflected pulse will be representative of the shortest distance to a corresponding transition between two layers, and this will most likely be more or less straight downward, assuming that the layer transitions are substantially parallel with the snow surface.

The GPR radar determines the transit time of the reflected signal and uses the transit time to calculate the depth of the reflecting layer. GPR radars can be classified as operating either in the time domain or in the frequency domain. A GPR operating in the time domain may transmit baseband pulses or noise modulated pulses. A GPR transmitting baseband pulses uses extremely short pulses that may be considerably shorter than the wavelength of the carrier wave. This is done to achieve a high bandwidth signal and the resulting waveform has a shape similar to a Mexican hat. It is therefore often referred to as a "Mexican hat" wavelet, or more formally as the negative normalized second derivative of a Gaussian function. Other Gaussian pulse shapes are also possible.

A noise-modulated GPR emits a random waveform as the transmitting signal, and detection of the reflected signal is based on optimal correlation between transmitted signal and received reflection. Due to the unpredictable spreading of energy across the bandwidth of the radar, the noise-modulated GPR reduces the amount of disturbance to others operating in the same bandwidth.

GPRs operating in the frequency domain include Frequency-Modulated Continuous Wave (FMCW) and Stepped Frequency FMCW (SFCW). FMCW radars may transmit a frequency sweep signal (chirp) or, in the case of SFCW, a sequence of individual frequencies. GPR radars operate in the frequency domain are slower than time domain radar systems, but they may be simpler and thus cheaper to produce. The transit time is obtained using inverse fast Fourier transformations.

The different types of radar systems described above may involve different advantages and disadvantages with respect to speed, cost, penetration depth, resolution and the amount of information that can be extracted from the signal in addition to transit time. Different embodiments of the invention may use any one of the radar systems described based on design criteria with respect to system performance.

In addition to transit time, which can be used to calculate depth to layer transitions, additional information about the snow layers can be determined from additional characteristics of the received reflected signal, such as the envelope, or shape, of the signal. In particular, while time between emission and reception will be indicative of the depth and location of transitions between layers, the amplitude, frequency response and shape of the received pulse will depend on dielectric properties of the snow, in particular dielectric permittivity, *ε*^{∗}, magnetic permeability, *µ*^{∗}, and electric conductivity *σ*^{∗}. Thus, it will be possible to characterize these properties based on measurement of amplitude and shape, and from the dielectric properties it is possible to derive characteristics of the snow, such as water content, density, ice-particle shape, etc.

Reference is made to Complex dielectric permittivity measurements from ground-penetrating radar data to estimate snow liquid water content in the pendular regime, by John H. Bradford, Joel T. Harper and Joel Brown, Water Resources Research, Vol. 45, available from https://agupubs.onlinenlibrary.wiley.com/doi/abs/10.1029/2008WR007341, and first published August 5, 2009. This article, which is hereby incorporated by reference in its entirety, describes how reflected amplitude and frequency spectrum can be used to estimate snow properties, and the methods described are used to implement some embodiments of the invention.

By repeatedly transmitting and receiving pulses while at the same time keeping track of positional data received from a positioning capability of the GPR device 13, such as a GPS receiver 403, possibly enhanced by additional data from for example an accelerometer 404, an inclinometer or gyroscope 405, and external data received over a wireless interface 409, 410, 411, it is possible to characterize the snow layers along the skier's track with considerable accuracy. The radar pulse may be a wide band pulse which may be frequency modulated, for example as a frequency-swept pulse (chirp).

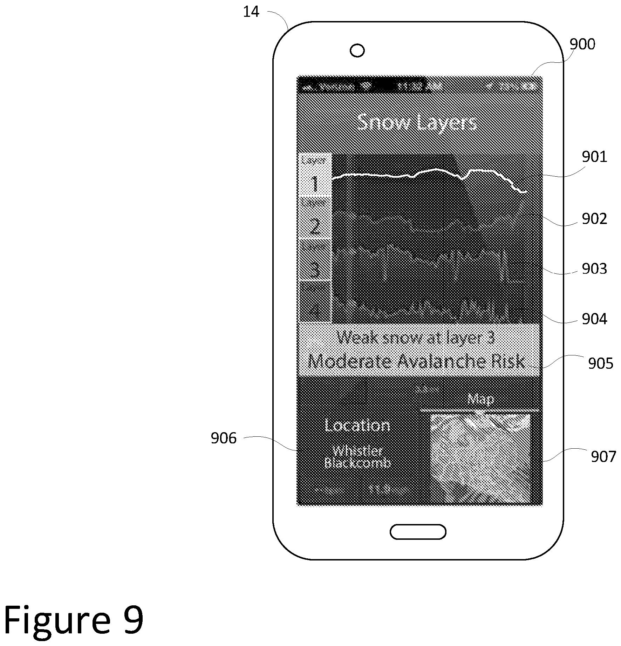

FIG. 9 is an example of how the derived data may be displayed on a device, such as a smartphone 14, carried by the skier 101. On a display 900 of the device 14 information is presented in different areas. In particular, a number of curves 901, 902, 903, 904 are shown, and these curves represent characteristic properties of the different layers of snow as derived from the received radar reflections. Below this area is an area 905 where alerts may be displayed. These alerts may correspond to that which is indicated by LEDs on the GPR device 13 itself, as described above, or it may be more specific warnings generated by the cloud service as will be described in further detail below. Towards the bottom of the display is an area that displays additional information in the form of the name of the area or location the skier 906 is in and a map 907.

Information about the snow layers derived from the reflected radar signal can be presented on the display 900 of the device 14 graphically, for example in the form of the color or background pattern of the area behind the curves 901, 902, 903, 904s), color or other characteristics of the curves themselves (for example in the form of a diffuse curve), and by other means that are found suitable for conveying this information. A trained person may then be able to estimate the avalanche risk simply by looking at the display, which will show an estimate of a snow profile along the track covered by the skier. It will be understood that the presentation of this information in and of itself is not part of the invention and that any convenient way of conveying information generated by the invention to a user may be selected.

In order to provide untrained skiers with adequate warnings the alert area 905 presents an estimated level of risk based on further processing of the available information. In some embodiments, this estimate is based on a function, or a set of rules, which maps input data extracted from the radar reflection signal to output risk assessment. This function may be preinstalled on the device and subsequently updated from the cloud service as will be described in further detail below. In some embodiments the function is a trained model (sometimes referred to as a pre-trained model) that has been generated through machine learning performed on aggregated data. An example of such a process will be described below.

As described above with reference to FIG. 3, data derived from the reflected radar signals by the GPR device 13, possibly in conjunction with a portable device 14, may be uploaded over a wide area network such as a cellular network and provided to an online service associated with one or more online servers 17. The online servers 17 may use additional online storage and computing services in order to further process the received data, aggregate data received from multiple GPR devices, obtain additional data for example weather or historical avalanche information, and distribute data to GPR devices 13 and/or associated portable devices 14. The processing performed by the online service may involve machine learning. The amount and type of processing implemented on the GPR device 13 itself, an associated portable device 14 and by the online service itself or accessible cloud services do not depend on each other. Therefore, embodiments with any amount of initial or further processing of the information obtained by the radar transceiver (or none at all) may be performed by any one device connected to a system according to the invention.

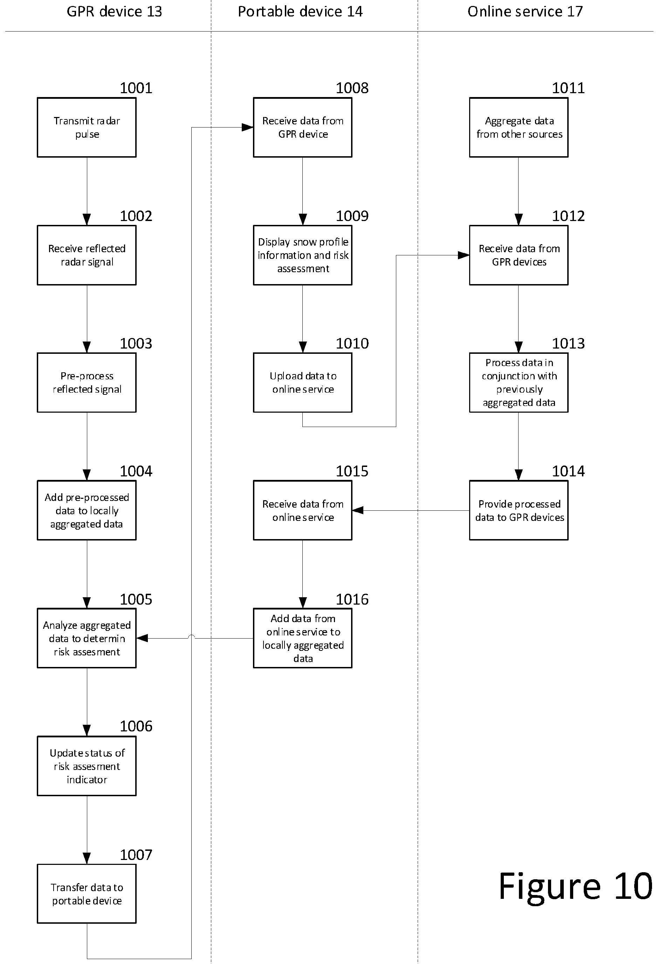

Reference is now made to FIG. 10, which is a flowchart illustrating how data may flow and be processed in a system according to the invention. The flowchart is in the form of a swim lane diagram where one column represents the GPR device 13, one column represents the portable device 14, and one lane represents the online service 17. The embodiment is exemplary only, and it is within the scope of the invention to distribute tasks differently, for example between the GPR device 13 and the portable device 14. Furthermore, the tasks performed by the online service 17 may actually be performed by many computers including several servers providing online data repositories, online data storage facilities, online processing resources and software libraries or algorithms, for example machine learning algorithms.

It should also be noted that while the flowchart illustrates the process as a series of discrete steps that are performed one after the other and not repeated until the process returns to that step, an actual embodiment will run many of these steps in parallel. For example, the GPR device 13 will transmit radar pulses (or radar frequency sweeps) continually, for example, some embodiments will emit 200 or more pulses as one measurement, or trace, and one trace takes less than 10ms. Traces may be generated and stored at specific times, for example every second, or at specific distances, for example every 10m. The received information is processed as soon as it is obtained, and the online service aggregates, processes and distributes information whenever it is received or requested.

In a first step 1001 the radar transceiver 402 transmits a radar pulse (or frequency sweep) using the transmitting antenna 412. This pulse is reflected by layer boundaries in the snow as described above and received by the transceiver 402 over the receiving antenna 413 in step 1002. The received reflected signal may then be processed by the microcontroller 401, possibly in cooperation with a co-processor 412, for example a DSP. The signal processing may first include pre-processing, performed as step 1003, in the form of frequency filtering and clutter filtering. The preprocessed data is then stored with locally aggregated data in local memory in step 1004. In a following step 1005 the locally aggregated data is delivered as input to a function, or a set of rules, that maps reflected radar data to an output that may include an estimated snow profile and a risk assessment. This function is preinstalled on the GPR device 13, but may be updated from the cloud service during use, as will be described in further detail below.

The data delivered as input to the function may, in addition to radar reflection data, include other relevant information received from the cloud service, including for example, weather data, wind, the number of hours an area has been directly exposed to sunshine, historical avalanche data and other relevant information that can be accepted by the function as input.

In embodiments where the GPR device 13 is provided with some sort of user interface (LED, buzzer, or something similar) with a risk assessment indicator, this indicator may now be updated 1006 if there is a change in risk assessment.

The new data may now be transferred 1007 to the portable device 14. Depending on the embodiment the data that is transferred may be one or more of the raw radar data, the pre-processed radar data, and the output from the snow profile and risk assessment generating function. It should be noted that it is within the scope of the invention to include all functionality in the GPR device 13 itself, in which case the steps described here as performed by the portable device 14 may be performed by the GPR device 13.

The transferred data is received 1008 by the portable device 14, for example over a Bluetooth interface. In some embodiments, the data may be further processed by the portable device 14. The snow profile information and risk assessment may then be displayed 1009 on the display of the portable device 14. Furthermore, the data may be uploaded 1010 to an online service 17 using, for example, a cellular network. The data uploaded to the online, or cloud, service 17 may be any combination of one or more of the raw radar input from step 1002, the pre-processed data from step 1003, and the result of the analysis in step 1005. According to the embodiment described in the following description, at least raw or preprocessed radar data is uploaded.

The online service may be configured to receive or obtain data from other online services and aggregate 1011 this information. This aggregated information may include radar data provided by other GPR devices as well as other relevant information for example relating to weather, wind, humidity, historical avalanche information etc. The online service 17 receives, in step 1012, data from the GPR device 13 and the data may now be processed 1013 together with aggregated data received from other GPR devices 13 as well as other online services. The actual processing may be performed by the server or servers providing the online service themselves, by dedicated hardware, or by another online service, for example a cloud computing platform providing machine learning and artificial intelligence. The processing performed by the online service 17 will be described in further detail below.

The result of this processing may now be used to update snow profile information and avalanche risk assessment that is stored by the online service and made available to GPR devices as well as other devices, for example as a web site. In addition, the processing may result in an updated snow profile and risk assessment function, as will be described in further detail below. This updated function may also be distributed to GPR devices. The data thus provided 1014 by the online service 17 is received 1015 by the portable device 14. The information may then be added 1016 to the locally aggregated data and it will thus be available the next time the step 1005 of analyzing aggregated data is performed. This process may continue as long as the GPR device 13 is active.

While the process is described above as flowing from one discrete step to another, it will be realized by those with skill in the art that many of the process steps are performed in parallel and continuously. As such, steps 1001 and 1002 are performed repeatedly, for example by emitting between 100 and 1000 pulses as one measurement, or trace. One trace may take between 1ms and 100ms. Traces may be generated and stored at specific times, for example every 0.1 seconds up to every 5 seconds, or at specific distances, for example every 10m or anywhere between every 2 meters and every 30 meters. The received reflected signals are processed and stored locally subsequent to being received irrespective of which other steps illustrated in the drawing are performed simultaneously. Similarly, external data may be received from the cloud intermittently and independently of the ongoing radar pulses, and the processing of local aggregated data in order to update of risk assessment and display of information on the portable device may at any time utilize all the latest data that has been received and added to the local memory 407.

Similarly, exchange of data between the GPR device 13 and the portable device 14 can be performed concurrently with the operation of the radar transceiver 402 and the processing of the resulting data.

The online service 17 may receive data in parallel from many GPR devices as well as other sources of information mentioned above, and the processing, aggregation and distribution of data may utilize any data that is available when the processing, aggregation or distribution is performed.

It will also be understood that the distribution of tasks between the GPR device 13 and the portable device 14 may be arranged differently, for example by processing or storing data in the portable device 14. Indeed, in some embodiments the GPR device 13 may include wide area communication capabilities and a display and perform all the steps described above as being performed by the portable device 14.

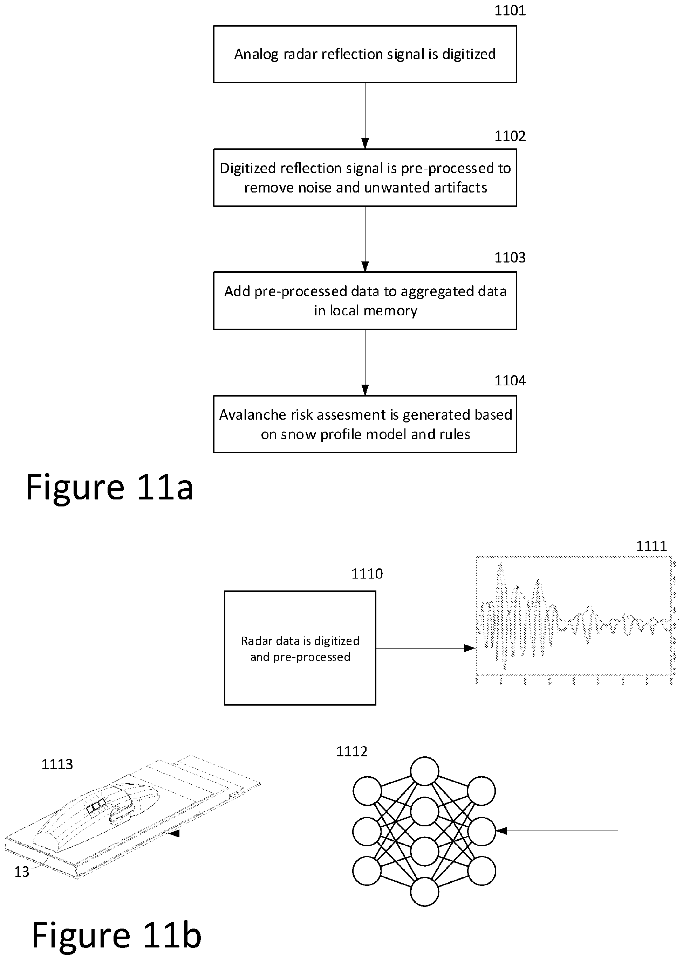

FIG. 11a illustrates an embodiment of a workflow for the signal processing of the reflected radar data which as performed on the GPR device 13. In a first step, the analog radar reflection signal is digitized. In a following step 1102 the digitized radar reflection signal is preprocessed in order to remove noise and unwanted artifacts (e.g. noise, clutter cancelation) from the signal. The pre-processed signal may then, in step 1103, be added to previously stored data in local memory 407. In step 1104 snow profile estimation and/or risk assessment is generated by delivering aggregated data as input to the snow profile and risk assessment function. This function is stored locally and is executed by the microcontroller 401 and/or the DSP 412 in order to build a model from the reflection data. The function may also take additional data as input, such as the slope of the terrain, temperature and humidity.

FIG. 11b shows substantially the same process, where the radar data is digitized and pre-processed in step 1110. The pre-processed data 1111 is delivered as input to the trained function 1112 stored on the GPR device 13 and a risk assessment is generated from the data. The risk assessment is used to update LEDs on the GPR device 13 to indicate the result of the risk assessment to the skier.

The steps illustrated in FIG. 11 correspond with the steps 1002 through 1006 in FIG. 10. It will be realized that these steps can be performed even if the GPR device 13 is not online. They do not require interaction with the online service.

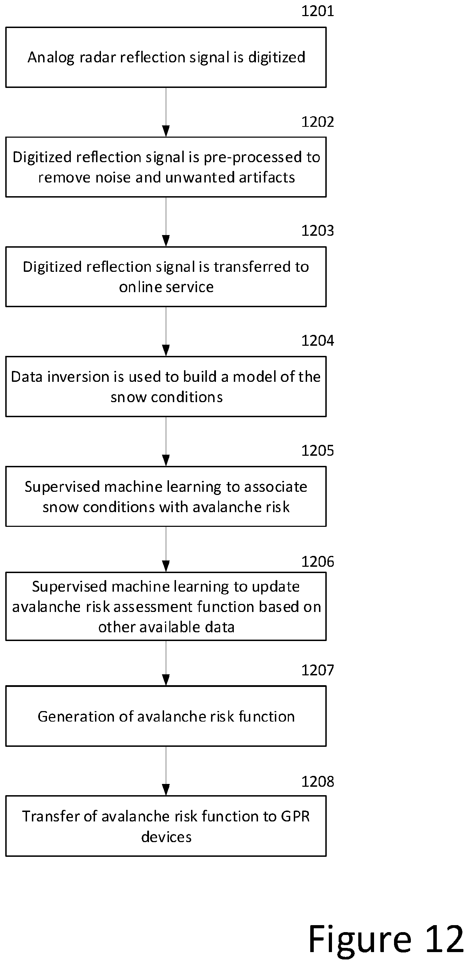

In FIG. 12 an embodiment of a process for processing data in the cloud and using the results to update connected GPR devices is shown.

In a first step 1201 the analog radar reflection signal is digitized. This is the same step as step 1101 in FIG. 11.

In a next step 1202 the digitized reflection signal is pre-processed in order to remove noise and other unwanted artifacts. This step corresponds to step 1102 in FIG. 11. Alternatively, the filtering could be performed by the online service subsequent to upload, which would be the same as uploading the raw radar data from step 1201. This may be convenient if different GPR devices implement slightly different pre-processing methods, which may cause the data aggregated by the online service may not be consistent. On the other hand, preprocessed data may be compressed relative to raw data and require less bandwidth to upload.

In step 1204 data inversion is performed to build a model of the snow conditions. This may take additional information into consideration, i.e. data obtained from other sources or additional knowledge about snow profile modeling. Data inversion as such is well known from the field of geological exploration.

Synthetic data may now be generated from the model. The synthetic data may be included in a training set that will be subject to supervised machine learning in step 1205. Synthetic data is used because it gives better control over the input to and the output from the machine learning process and makes it possible to modify the model based on other knowledge that which is inherent in the radar data. However, in alternative embodiments the data inversion and generation of synthetic training data is replaced by unsupervised machine learning for identification of clusters or patterns in the radar data. These clusters or patterns can be used to label the radar data based on best guess estimates, and the labeled radar data is used for supervised machine learning similar to synthetic data supervised machine learning as described above.

The machine learning process may generate a function that associates snow conditions with snow parameters, and potentially also with avalanche risk. In step 1206 the supervised machine learning may be expanded to include other data, such as weather, historical avalanche information from the relevant area etc.

The machine learning is performed in two steps (data inversion and synthetic data generation or unsupervised learning, followed by supervised training) in order to create labels (parameter values) for the training set. A potential advantage with the data inversion model is, as already mentioned, greater control over the input to the machine learning that actually generates the trained model. The data samples received from GPR radars all include the same type of information (radar reflection signal, position, slope, temperature), and all this information relates to the same occurrence (the same position and point in time), making the data well suited to unsupervised machine learning as well as data inversion. Other information, such as weather (current as well as historical), historical avalanche information, topography, etc., cannot be directly related to individual samples, but may be used to make more general modifications either to the model generated through data inversion, during the supervised training, or both, providing increased accuracy to the trained model for a given area or given conditions.

The process then moves on to step 1207 where a finalized parameter generation and risk assessment function, or a corresponding set of rules, are generated. This function is transferred or distributed to GPR devices in step 1208 where they can be used to generate local risk assessment based on real time radar data (step 1104 in FIG. 11).

The steps illustrated in FIG. 12 correspond to steps 1007 through 1016 in FIG. 10. In FIG. 10 emphasis is on data flow, while in FIG. 12 emphasis is on signal processing. Reference is made to Bradford, J. H., Harper, J. T., & Brown, J. (2009), already mentioned above and incorporated by reference, for further information on data inversion based on snow condition data.

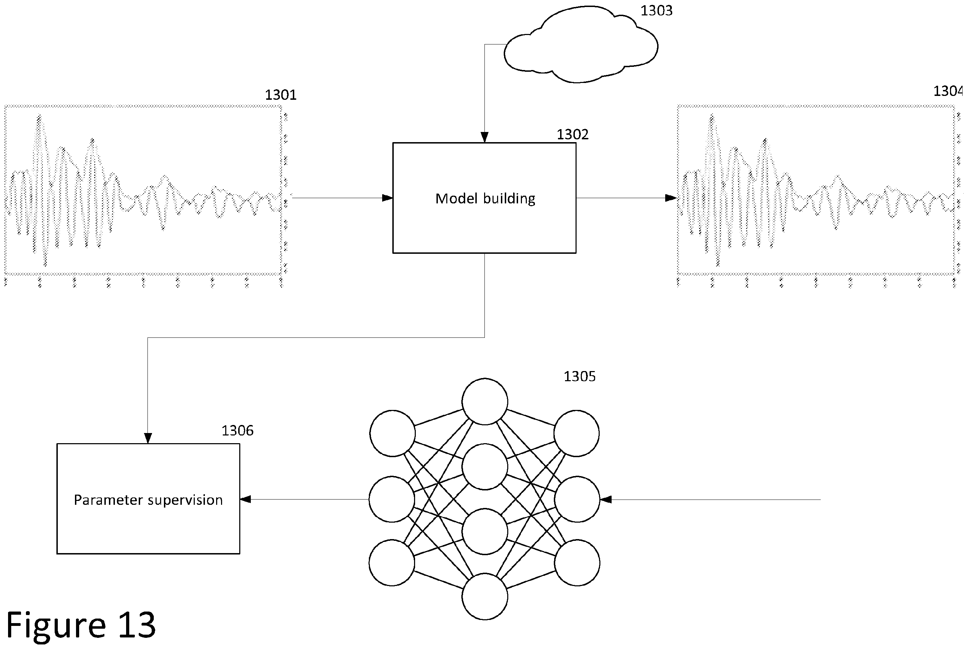

Reference is now made to FIG. 13, which shows a more detailed illustration of the machine learning process. Real input data is shown in block 1301. This is data that is received from an actual GPR device 13. Based on this input data a model of the snow conditions that generated this data reflection signal is generated in block 1302. The model building may take additional data received from the cloud 1303 into consideration. The model includes parameters such as:
Wetness, W
Dielectric permittivity, *ε*
Magnetic permeability, *µ*
Electric conductivity, *σ*
Attenuation coefficient, *α*
Loss tangent *(tan δ)*
Snow temperature, t

Based on the model, synthetic data can be generated, and the synthetic data can be used to further train, test and validate the model using machine learning 1305.

As described with reference to FIG. 12, the model building and synthetic data generation can be replaced by unsupervised machine learning and labeling.

Finally, parameter supervision can be used in step 1306 to verify that the parameters estimated by the trained function correspond to parameters established through data inversion modelling.

The process described with reference to FIG. 13 corresponds with steps 1203-1207 of FIG. 12. The trained function, or trained model, generated through machine learning can be transferred to GPR devices in order to update the function already installed.

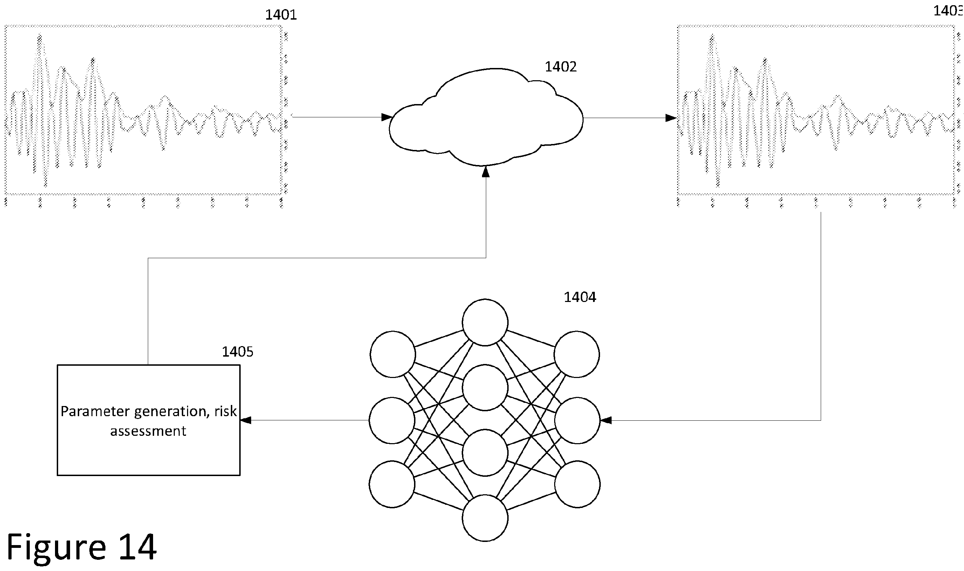

FIG. 14 shows how, according to some embodiments, risk assessment may be performed in the cloud when the GPR device 13 is online. In a first step 1401 the radar data from the GPR device 13 is uploaded to the cloud 1402. The online service delivers the input data 1403 to the most current risk assessment function, which generates estimated parameters for the respective layers, and a corresponding risk assessment. The generated parameters may be delivered back to the cloud in order to be stored by the service, made available to other devices, or in order to be further processed as part of a wider assessment of the snow conditions in an area. The generated parameters and risk assessment may also be transferred back to the GPR device 13, for example in order to be displayed on the display of the portable device 14, as shown in FIG. 9.

The accuracy and the resolution of the snow analysis can be improved based on additional tools. For example, it is possible to combine multiple radars and antennas along the ski as well as on both skis. Furthermore, as the skier moves across the snow surface, multiple radar measurements taken at multiple times and locations may be combined based on positioning information provided by a GPS receiver. Correlation between measurements taken closely together in space and/or time may be used to distinguish relevant information from noise and other unwanted artifacts in the received signal.

In order to penetrate deeper into the layers of snow, or to cancel noise interferences, the signal from the source may be more complex than just a pulse signal, for example a frequency sweep signal (chirp). This may necessitate pre-processing of the received signal using correlation, deconvolution and filter algorithms. These algorithms may be executed by the DSP 412.

The present invention is designed to penetrate to a maximum depth of approximately 10 meters into layers of snow and transformed snow. The actual depth of penetration may depend on current conditions such as the density, character and water content of the snow, as well as design choices such as transmitting power, number and design of transmitting and receiving antennas, signal shape, processing power, etc.

While the invention has been described above in the context of being used by skiers who have GPR radar devices mounted on their skis (or similar equipment such as snow shoes, sled or toboggan), and for the purpose of obtaining avalanche risk assessment, the invention may be adapted to other application areas. Some examples are described below.

Embodiments of the invention more related to environmental research include equipping expeditions going to very remote areas (such as the north and south poles) with the invention in order to record ice and snow thickness over long periods without having to carry heavy equipment and without dedicating any time to this activity. In the context, the invention will remain unchanged, however the firmware in the GPR device may be updated to make less frequent measurements and therefore extend the typical battery life of the system. The radar may also be configured differently to not focus on thin snow layer resolution but rather on penetrating deeper into the snow layers.

Another possible application is checking that ice thickness is safe on lakes and rivers before vehicles and people are allowed access. The invention could be used to determine if roads and ski trails should be open or closed during the winter season.

A further possible application is for checking the crust layer of any type of ground, such as the top layer determination of for example a desert ground, volcanic active area, ground frost thickness, crust above tundra (summer), tundra thickness and other.

Although the applications discussed above describe the use of GPR devices, it should be understood that the same objective may be achieved using other techniques, for example transmitters/receivers/transducers for ultrasound, to provide the ground reflection signal.

For some of the above applications, it may be convenient to consider designing a larger antenna.

## Claims

1. A ski or ski-like device (10) for or part of equipment for travelling across an area covered with snow, comprising:
a first antenna (412) configured for transmitting ground penetrating radar signals;
a second antenna (413) for receiving reflected ground penetrating radar signals;
at least one substrate (501) with said first antenna (412) and said second antenna (413) applied to a first side;
a ground plane (502) applied to a second side of said at least one substrate (501), said second side being opposite to said first side;
two first connectors (506) connected to said first and said second antenna (412, 413) respectively and configured to be connected to a radar transceiver (402);
wherein a core or base of said ski or ski-like device (10) is provided with a recessed area (601) into which said at least one substrate (501) is positioned with said first side facing in a direction that is towards the snow when the ski or ski-like device (10) is used; and
wherein the ski or ski-like device (10) is provided with one or more holes (602) from said recessed area (601) and towards the top of the ski or ski-like device (10) fully or partly through the ski or ski-like device (10) and into which the two first connectors (506) are positioned.

2. A ski or ski-like device (10) according to claim 1, where said at least one hole (602) stretches partly from the recessed area towards the top of the ski or ski-like device (10) and the top of the ski or ski-like device (10) is provided with markings indicating the position of the two connectors such that additional holes can be drilled through the markings in order to expose the two first connectors (506).

3. A ski or ski-like device (10) according to claim 1, where said at least one hole (602) stretches all the way from the recessed area and through the top of the ski Z r or ski-like device (10) and a removable plate or plug (701) is provided on top of the ski or ski-like device (10) such that the at least one hole (602) is covered until the plate or plug is removed to expose the first connectors (506).

4. A ski or ski-like device (10) according to claim 1, where said at least one hole (602) stretches all the way from the recessed area and through the top of the ski Z r or ski-like device (10) and a device holder (705) is provided on top of the ski or ski-like device (10) such that the device holder (705) covers said at least one hole (602); wherein
said device holder (705) has two additional connectors (706) that are connected to said two first connectors (506) and a locking device (802) configured; and
said locking device (802) is configured to receive and hold an electronic device (13) and said two additional connectors (706) are configured to provide contact between a radar transceiver (402) in said electronic device (13) and said first and second antenna (412, 413).

5. A ski or ski-like device (10) according to claim 1, wherein said at least one hole (602) stretches all the way from the recessed area and through the top of the ski or ski-like device (10), and an electronic device (13) is attached to the top of said ski or ski-like device (10) such that it covers said at least one hole (602); and
wherein said electronic device (13) comprises:
a radar transceiver (402) connected to said first and second antenna (412, 413) over said two first connectors (506); and
a microcontroller (401) configured to control said radar transceiver (402) to transmit radar signals over said first antenna (412) and receive reflected radar signals over said second antenna (413), process received radar signals, and generate a representation of the layers of snow or ice below said ski or ski-like device (10).

6. A ski or ski-like device (10) according to claim 5 , wherein:
an antenna component (500) includes the first antenna (412) and the second antenna (413),
wherein said first antenna is connected to said radar transceiver (402) and configured to receive a radar transmission signal from said radar transceiver (402) and radiate said radar transmission signal downwards into one or more layers of snow or ice, and said second antenna (413) is configured to receive a reflected radar signal from said one or more layers of snow or ice and deliver said reflected radar signal to said radar transceiver (402).

7. A ski or ski-like device (10) according to claim 6, when dependent on claim 5, wherein the electronic device (13) further comprises:
one or more radio communication interfaces selected from the group consisting of: WiFi, satellite positioning signals, short range radio, cellular telephone communication, and long range radio communication.

8. A ski or ski-like device (10) according to claim 7, wherein said microcontroller is further configured to control said one or more radio communication interfaces in order to establish communication with an online service, upload data derived from said received radar signal and download results generated by said online service from processing of said uploaded data.

9. A ski or ski-like device (10)according to one of the claims 8, 7 or 6, when claim 6 is dependent on claim 5, wherein the microcontroller is further configured to generate estimated snow layer characteristics based on the generated representation of parameters associated with the properties of the one or more layers of snow or ice.

10. A ski or ski-like device (10)according to claim 8, wherein the microcontroller is further configured to generate a risk assessment based on said snow layer characteristics, the electronic device further comprising a user interface capable of emitting or displaying one or more of sound, light, symbols and a radio broadcast signal, indicating the result of said generated risk assessment.

11. A computer system connected to a computer network and configured to:
receive data derived from a reflected ground penetrating radar signal provided by at least one or more ski or ski-like devices (10) according to claim 1, wherein said at least one hole (602) stretches all the way from the recessed area and through the top of the ski or ski-like device (10), and an electronic device (13) is attached to the top of said ski or ski-like device (10) such that it covers said at least one hole (602); and
wherein said electronic device (13) comprises:
a radar transceiver (402) connected to said first and second antenna (412, 413) over said two first connectors (506); and
a microcontroller (401) configured to control said radar transceiver (402) to transmit radar signals over said first antenna (412) and receive reflected radar signals over said second antenna (413), process received radar signals, and generate a representation of the layers of snow or ice below said ski or ski-like device (10), the system further configured to:
generate a data set from the received data, said data set including labels representing snow condition parameters;
perform machine learning on said generated data set including labels representing snow condition parameters to generate a trained model capable of mapping data derived from a reflected ground penetrating radar signal to at least one of a model of said one or more layers of snow or ice and a risk assessment representative of an avalanche risk, wherein the machine learning comprises performing unsupervised machine learning on said received data derived from a reflected ground penetrating radar signal to generate an identification of clusters or patterns; and
associating identified clusters or patterns with assumed snow condition parameter values; and
transmit data representing the trained model over the computer network.

12. A method in an electronic device mounted on or integrated in a ski or ski-like device (10) according to claim 1, wherein said at least one hole (602) stretches all the way from the recessed area and through the top of the ski or ski-like device (10), and an electronic device (13) is attached to the top of said ski or ski-like device (10) such that it covers said at least one hole (602); and
wherein said electronic component comprises:
a radar transceiver (402) connected to said first and second antenna (412, 413) over said two first connectors (506); and
a microcontroller (401) configured to control said radar transceiver (402) to transmit radar signals over said first antenna (412) and receive reflected radar signals over said second antenna (413), process received radar signals, and generate a representation of the layers of snow or ice below said ski or ski-like device (10),
the method comprising:
transmitting a ground penetrating radar signal downwards into one or more layers of snow or ice;
receiving a reflected ground penetrating radar signal from said one or more layers of snow or ice;
converting said reflected ground penetrating radar signal to a digital signal; and
delivering said digital signal as input to a function that delivers a representation of said one or more layers of snow or ice as its output.

13. A method according to claim 12, further comprising:
using a radio communication interface of said electronic device (13) to transmit data derived from said reflected ground penetrating radar signal to a remote online service; and
receiving in response from said remote online service at least one of a representation of said one or more layers of snow or ice, and an updated version of said function that delivers a representation of said one or more layers of snow or ice as output when receiving data derived from a ground penetrating radar as its input.

14. A method in a computer system connected to a computer network comprising:
receiving data derived from a reflected ground penetrating radar signal provided by at least one or more ski or ski-like devices (10) according to claim 1, wherein said at least one hole (602) stretches all the way from the recessed area and through the top of the ski or ski-like device (10), and an electronic device (13) is attached to the top of said ski or ski-like device (10) such that it covers said at least one hole (602); and
wherein said electronic device (13) comprises:
a radar transceiver (402) connected to said first and second antenna (412, 413) over said two first connectors (506); and
a microcontroller (401) configured to control said radar transceiver (402) to transmit radar signals over said first antenna (412) and receive reflected radar signals over said second antenna (413), process received radar signals, and generate a representation of the layers of snow or ice below said ski or ski-like device (10),
the method comprising:
generating a data set from the received data, said data set including labels representing snow condition parameters;
performing machine learning on said generated data set including labels representing snow condition parameters to generate a trained model capable of mapping data derived from a reflected ground penetrating radar signal to at least one of a model of said one or more layers of snow or ice and a risk assessment representative of an avalanche risk; and
transmitting data representing the trained model over the computer network.

15. A method according to claim 14, further comprising:
- obtaining additional data from one or more online repositories and use said additional data to refine said trained model, wherein said additional data is chosen from a group consisting of: current weather data in an area, historical weather data from an area, current temperature in an area, historical temperature in an area, historical data representing amount of sunshine in an area, current air humidity in an area, historical air humidity in an area, and historical avalanche information relating to an area.

## Patentansprüche

1. Ski oder ski-ähnliche Vorrichtung (10) für eine, oder Teil einer, Ausrüstung zum Fortbewegen über ein mit Schnee bedecktes Gebiet, umfassend:
eine erste Antenne (412), die konfiguriert ist, um bodendurchdringende Radarsignale zu übertragen;
eine zweite Antenne (413), die konfiguriert ist, um reflektierte bodendurchdringende Radarsignale zu empfangen;
mindestens ein Substrat (501) mit der ersten Antenne (412) und der zweiten Antenne (413), die auf einer ersten Seite angebracht sind;
eine Masseplatte (502), die auf einer zweiten Seite des mindestens einen Substrats (501) angebracht ist, welche zweite Seite der ersten Seite gegenüberliegt;
zwei erste Verbinder (506), die mit der ersten bzw. der zweiten Antenne (412, 413) verbunden und konfiguriert sind, um mit einem Radar-Sendeempfänger (402) verbunden zu werden;
wobei ein Kern oder eine Basis des Skis oder der ski-ähnlichen Vorrichtung (10) mit einem vertieften Bereich (601) versehen ist, in dem das mindestens eine Substrat (501) positioniert ist, wobei die erste Seite in eine Richtung zeigt, die dem Schnee zugewandt ist, wenn der Ski oder die ski-ähnliche Vorrichtung (10) verwendet wird; und
wobei der Ski oder die ski-ähnliche Vorrichtung (10) mit einem oder mehreren Löchern (602) versehen ist, die sich von dem vertieften Bereich (601) und in Richtung der Oberseite des Skis oder der ski-ähnlichen Vorrichtung (10) vollständig oder teilweise durch den Ski oder die ski-ähnliche Vorrichtung (10) erstrecken und in denen die beiden ersten Verbinder (506) positioniert sind.

2. Ski oder ski-ähnliche Vorrichtung (10) nach Anspruch 1, worin sich das mindestens eine Loch (602) teilweise von dem vertieften Bereich in Richtung der Oberseite des Skis oder der ski-ähnlichen Vorrichtung (10) erstreckt und die Oberseite des Skis oder der ski-ähnlichen Vorrichtung mit Markierungen versehen ist, die die Position der beiden Verbinder anzeigen, so dass zusätzliche Löcher durch die Markierungen gebohrt werden können, um die beiden ersten Verbinder (506) freizulegen.

3. Ski oder ski-ähnliche Vorrichtung (10) nach Anspruch 1, worin sich das mindestens eine Loch (602) vollständig von dem vertieften Bereich durch die Oberseite des Skis oder der ski-ähnlichen Vorrichtung (10) erstreckt und eine abnehmbare Platte oder ein abnehmbarer Stopfen (701) auf der Oberseite des Skis oder der ski-ähnlichen Vorrichtung (10) vorgesehen ist, so dass das mindestens eine Loch (602) abgedeckt ist, bis die Platte oder der Stopfen entfernt wird, um die ersten Verbinder (506) freizulegen.

4. Ski oder ski-ähnliche Vorrichtung (10) nach Anspruch 1, worin sich das mindestens eine Loch (602) vollständig von dem vertieften Bereich durch die Oberseite des Skis oder der ski-ähnlichen Vorrichtung (10) erstreckt und ein Vorrichtungshalter (705) auf der Oberseite des Skis oder der ski-ähnlichen Vorrichtung (10) vorgesehen ist, so dass der Vorrichtungshalter (705) das mindestens eine Loch (602) abdeckt; wobei
der Vorrichtungshalter (705) zwei zusätzliche Verbinder (706) aufweist, die mit den beiden ersten Verbindern (506) verbunden sind, und eine konfigurierte Verriegelungsvorrichtung (802); und
die Verriegelungsvorrichtung (802) konfiguriert ist, um eine elektronische Vorrichtung (13) aufzunehmen und zu halten, und die beiden zusätzlichen Verbinder (706) konfiguriert sind, um einen Kontakt zwischen einem Radar-Sendeempfänger (402) in der elektronischen Vorrichtung (13) und der ersten und zweiten Antenne (412, 413) herzustellen.

5. Ski oder ski-ähnliche Vorrichtung (10) nach Anspruch 1, wobei sich das mindestens eine Loch (602) vollständig von dem vertieften Bereich durch die Oberseite des Skis oder der ski-ähnlichen Vorrichtung (10) erstreckt und eine elektronische Vorrichtung (13) an der Oberseite des Skis oder der ski-ähnlichen Vorrichtung (10) befestigt ist, so dass sie das mindestens eine Loch (602) abdeckt; und
wobei die elektronische Vorrichtung (13) Folgendes umfasst:
einen Radar-Sendeempfänger (402), der mit der ersten und zweiten Antenne (412, 413) über zwei erste Verbinder (506) verbunden ist; und
einen Mikrocontroller (401), der konfiguriert ist, um den Radar-Sendeempfänger (402) so zu steuern, dass er Radarsignale über die erste Antenne (412) sendet und reflektierte Radarsignale über die zweite Antenne (413) empfängt, empfangene Radarsignale verarbeitet und eine Darstellung der Schnee- oder Eisschichten unter dem Ski oder der ski-ähnlichen Vorrichtung (10) erzeugt.

6. Ski oder ski-ähnliche Vorrichtung (10) nach Anspruch 5, wobei:
eine Antennenkomponente (500) die erste Antenne (412) und die zweite Antenne (413) enthält, wobei die erste Antenne mit dem Radar-Sendeempfänger (402) verbunden und konfiguriert ist, um ein Radar-Sendesignal von dem Radar-Sendeempfänger (402) zu empfangen und das Radar-Sendesignal nach unten in eine oder mehrere Schnee- oder Eisschichten abzustrahlen, und die zweite Antenne (413) konfiguriert ist, um ein reflektiertes Radarsignal von der einen oder den mehreren Schnee- oder Eisschichten zu empfangen und das reflektierte Radarsignal an den Radar-Sendeempfänger (402) zu liefern.

7. Ski oder ski-ähnliche Vorrichtung (10) nach Anspruch 6, wenn abhängig von Anspruch 5, wobei die elektronische Vorrichtung (13) ferner Folgendes umfasst:
eine oder mehrere Funkkommunikationsschnittstellen, ausgewählt aus der Gruppe bestehend aus: WiFi, Satellitenortungssignale, Kurzstreckenfunk, Mobiltelefonkommunikation und Langstreckenfunkkommunikation.

8. Ski oder ski-ähnliche Vorrichtung (10) nach Anspruch 7, wobei der Mikrocontroller ferner konfiguriert ist, um die eine oder mehrere Funkkommunikationsschnittstellen zu steuern, um eine Kommunikation mit einem Online-Dienst herzustellen, von dem empfangenen Radarsignal abgeleitete Daten hochzuladen und von dem Online-Dienst aus der Verarbeitung der hochgeladenen Daten erzeugte Ergebnisse herunterzuladen.

9. Ski oder ski-ähnliche Vorrichtung (10) nach einem der Ansprüche 8, 7 oder 6, wenn Anspruch 6 von Anspruch 5 abhängig ist, wobei der Mikrocontroller ferner konfiguriert ist, um geschätzte Schneeschichteigenschaften auf der Grundlage der erzeugten Darstellung von Parametern zu erzeugen, die mit den Eigenschaften der einen oder mehreren Schnee- oder Eisschichten verbunden sind.

10. Ski oder ski-ähnliche Vorrichtung (10) nach Anspruch 8, wobei der Mikrocontroller ferner konfiguriert ist, um eine Risikobewertung auf der Grundlage der Schneeschichteigenschaften zu erzeugen, wobei die elektronische Vorrichtung ferner eine Benutzerschnittstelle umfasst, die in der Lage ist, eines oder mehrere von Ton, Licht, Symbolen und einem Funksignal abzugeben oder anzuzeigen, die das Ergebnis der erzeugten Risikobewertung anzeigen.

11. Computersystem, das mit einem Computernetzwerk verbunden und konfiguriert ist, um:
Daten zu empfangen, die von einem reflektierten bodendurchdringendem Radarsignal abgeleitet sind, das von mindestens einem oder mehreren Ski oder ski-ähnlichen Geräten (10) nach Anspruch 1 bereitgestellt wird, wobei sich das mindestens eine Loch (602) vollständig von dem vertieften Bereich durch die Oberseite des Skis oder der ski-ähnlichen Vorrichtung (10) erstreckt und eine elektronische Vorrichtung (13) an der Oberseite des Skis oder der ski-ähnlichen Vorrichtung (10) befestigt ist, so dass sie das mindestens eine Loch (602) abdeckt; und
wobei die elektronische Vorrichtung (13) Folgendes umfasst:
einen Radar-Sendeempfänger (402), der mit der ersten und zweiten Antenne (412, 413) über zwei erste Verbinder (506) verbunden ist; und
einen Mikrocontroller (401), der konfiguriert ist, um den Radar-Sendeempfänger (402) so zu steuern, dass er Radarsignale über die erste Antenne (412) sendet und reflektierte Radarsignale über die zweite Antenne (413) empfängt, empfangene Radarsignale verarbeitet und eine Darstellung der Schnee- oder Eisschichten unter dem Ski oder der ski-ähnlichen Vorrichtung (10) erzeugt, wobei das System ferner konfiguriert ist, um:
einen Datensatz aus den empfangenen Daten zu erzeugen, wobei der Datensatz Etiketten enthält, die Schneezustandsparameter darstellen;
maschinelles Lernen an dem erzeugten Datensatz, der Etiketten enthält, die Schneezustandsparameter darstellen, durchzuführen, um ein trainiertes Modell zu erzeugen, das in der Lage ist, Daten abzubilden, die von einem reflektierten, bodendurchdringenden Radarsignal abgeleitet wurden, auf mindestens eines von einem Modell der einen oder mehreren Schnee- oder Eisschichten und einer ein Lawinenrisiko darstellenden Risikobewertung, wobei das maschinelle Lernen die Durchführung von unüberwachtem maschinellem Lernen an den empfangenen Daten umfasst, die von einem reflektierten bodendurchdringenden Radarsignal abgeleitet sind, um eine Identifizierung von Clustern oder Mustern zu erzeugen; und
identifizierte Cluster oder Muster angenommenen Schneebedingungsparameterwerten zuzuteilen; und
Daten, die das trainierte Modell darstellen, über das Computernetzwerk zu übertragen.

12. Verfahren in einer elektronischen Vorrichtung, die auf einem Ski oder einer ski-ähnlichen Vorrichtung (10) nach Anspruch 1 montiert oder darin integriert ist, wobei sich das mindestens eine Loch (602) vollständig von dem vertieften Bereich durch die Oberseite des Skis oder der ski-ähnlichen Vorrichtung (10) erstreckt und eine elektronische Vorrichtung (13) an der Oberseite des Skis oder der ski-ähnlichen Vorrichtung (10) befestigt ist, so dass sie das mindestens eine Loch (602) abdeckt; und
wobei die elektronische Komponente Folgendes umfasst:
einen Radar-Sendeempfänger (402), der mit der ersten und zweiten Antenne (412, 413) über zwei erste Verbinder (506) verbunden ist; und
einen Mikrocontroller (401), der konfiguriert ist, um den Radar-Sendeempfänger (402) so zu steuern, dass er Radarsignale über die erste Antenne (412) sendet und reflektierte Radarsignale über die zweite Antenne (413) empfängt, empfangene Radarsignale verarbeitet und eine Darstellung der Schnee- oder Eisschichten unter dem Ski oder der ski-ähnlichen Vorrichtung (10) erzeugt, welches Verfahren Folgendes umfasst:
Übertragen eines bodendurchdringenden Radarsignals nach unten in eine oder mehrere Schnee- oder Eisschichten;
Empfangen eines reflektierten bodendurchdringenden Radarsignals von den einen oder mehreren Schnee- oder Eisschichten;
Umwandeln des reflektierten bodendurchdringenden Radarsignals in ein digitales Signal; und
Liefern des digitalen Signals als Eingabe an eine Funktion, die als Ausgabe eine Darstellung der einen oder mehreren Schnee- oder Eisschichten liefert.

13. Verfahren nach Anspruch 12, das ferner Folgendes umfasst:
Verwendung einer Funkkommunikationsschnittstelle der elektronischen Vorrichtung (13) zum Übertragen von Daten, die aus dem reflektierten Bodenradarsignal abgeleitet wurden, an einen entfernten Online-Dienst; und
Empfangen, als Antwort von dem entfernten Online-Dienst, von mindestens einem von einer Darstellung der einen oder mehreren Schnee- oder Eisschichten und einer aktualisierten Version der Funktion, die eine Darstellung der einen oder mehreren Schnee- oder Eisschichten als Ausgabe liefert, wenn sie von einem bodendurchdringenden Radar abgeleitete Daten als Eingabe empfängt.

14. Verfahren in einem Computersystem, das mit einem Computernetzwerk verbunden ist, das Folgendes umfasst:
Empfangen von Daten, die von einem reflektierten bodendurchdringendem Radarsignal abgeleitet sind, das von mindestens einem oder mehreren Ski oder ski-ähnlichen Geräten (10) nach Anspruch 1 bereitgestellt wird, wobei sich das mindestens eine Loch (602) vollständig von dem vertieften Bereich durch die Oberseite des Skis oder der ski-ähnlichen Vorrichtung (10) erstreckt und eine elektronische Vorrichtung (13) an der Oberseite des Skis oder der ski-ähnlichen Vorrichtung (10) befestigt ist, so dass sie das mindestens eine Loch (602) abdeckt; und
wobei die elektronische Vorrichtung (13) Folgendes umfasst:
einen Radar-Sendeempfänger (402), der mit der ersten und zweiten Antenne (412, 413) über zwei erste Verbinder (506) verbunden ist; und
einen Mikrocontroller (401), der konfiguriert ist, um den Radar-Sendeempfänger (402) so zu steuern, dass er Radarsignale über die erste Antenne (412) sendet und reflektierte Radarsignale über die zweite Antenne (413) empfängt, empfangene Radarsignale verarbeitet und eine Darstellung der Schnee- oder Eisschichten unter dem Ski oder der ski-ähnlichen Vorrichtung (10) erzeugt, welches Verfahren Folgendes umfasst:
Erzeugen eines Datensatzes aus den empfangenen Daten, wobei der Datensatz Etiketten enthält, die Schneezustandsparameter darstellen;
Durchführen von maschinellem Lernen an dem erzeugten Datensatz, der Etiketten enthält, die Schneezustandsparameter darstellen, um ein trainiertes Modell zu erzeugen, das in der Lage ist, Daten abzubilden, die von einem reflektierten, bodendurchdringenden Radarsignal abgeleitet wurden, auf mindestens eines von einem Modell der einen oder mehreren Schnee- oder Eisschichten und einer ein Lawinenrisiko darstellenden Risikobewertung; und
Übertragen von Daten, die das trainierte Modell darstellen, über das Computernetzwerk.

15. Verfahren nach Anspruch 14, das ferner Folgendes umfasst:
- Erhalten zusätzlicher Daten aus einem oder mehreren Online-Repositorien und Verwenden der zusätzlichen Daten zur Verfeinerung des trainierten Modells, wobei die zusätzlichen Daten aus einer Gruppe ausgewählt sind, die besteht aus: aktuellen Wetterdaten in einem Gebiet, historischen Wetterdaten aus einem Gebiet, aktueller Temperatur in einem Gebiet, historischer Temperatur in einem Gebiet, historischen Daten, die die Sonnenscheindauer in einem Gebiet darstellen, aktueller Luftfeuchtigkeit in einem Gebiet, historischer Luftfeuchtigkeit in einem Gebiet und historischen Lawineninformationen, die sich auf ein Gebiet beziehen.

## Revendications

1. Dispositif de ski ou de type ski (10) pour un équipement ou une partie d'équipement pour se déplacer sur une zone couverte de neige, comprenant :
une première antenne (412) configurée pour transmettre des signaux de radar géologique ;
une deuxième antenne (413) pour recevoir des signaux de radar géologique réfléchis ;
au moins un substrat (501) avec ladite première antenne (412) et ladite deuxième antenne (413) appliquées sur un premier côté ;
un plan de masse (502) appliqué sur un deuxième côté dudit au moins un substrat (501), ledit deuxième côté étant opposé audit premier côté ;
deux premiers connecteurs (506) connectés respectivement à ladite première et à ladite deuxième antenne (412, 413) et configurés pour être connectés à un émetteur-récepteur radar (402) ;
dans lequel une âme ou base dudit dispositif de ski ou de type ski (10) est pourvue d'une zone évidée (601) dans laquelle ledit au moins un substrat (501) est positionné avec ledit premier côté orienté dans une direction qui donne sur la neige lorsque le dispositif de ski ou de type ski (10) est utilisé ; et
dans lequel le dispositif de ski ou de type ski (10) est pourvu d'un ou de plusieurs trous (602) à partir de ladite zone évidée (601) et vers le haut du dispositif de ski ou de type ski (10) complètement ou partiellement à travers le dispositif de ski ou de type ski (10) et dans lesquels les deux premiers connecteurs (506) sont positionnés.

2. Dispositif de ski ou de type ski (10) selon la revendication 1, dans lequel ledit au moins un trou (602) s'étend partiellement de la zone évidée vers le sommet du dispositif de ski ou de type ski (10), et le sommet du dispositif de ski ou de type ski est pourvu de marquages indiquant la position des deux connecteurs si bien que des trous supplémentaires peuvent être percés à travers les marquages afin d'exposer les deux premiers connecteurs (506).

3. Dispositif de ski ou de type ski (10) selon la revendication 1, dans lequel ledit au moins un trou (602) s'étend sur toute la distance à partir de la zone évidée et à travers le sommet du dispositif de ski ou de type ski (10) et une plaque ou un bouchon amovible (701) est prévu sur le sommet du dispositif de ski ou de type ski (10) si bien que l'au moins un trou (602) est recouvert jusqu'à ce que la plaque ou le bouchon soit retiré afin d'exposer les premiers connecteurs (506).

4. Dispositif de ski ou de type ski (10) selon la revendication 1, dans lequel ledit au moins un trou (602) s'étend sur toute la distance à partir de la zone évidée et à travers le sommet du dispositif de ski ou de type ski (10), et un support de dispositif (705) est prévu sur le sommet du dispositif de ski ou de type ski (10) si bien que le support de dispositif (705) recouvre ledit au moins un trou (602) ; dans lequel
ledit support de dispositif (705) comporte deux connecteurs supplémentaires (706) qui sont connectés auxdits deux premiers connecteurs (506) et un dispositif de verrouillage (802) configuré ; et
ledit dispositif de verrouillage (802) est configuré pour recevoir et maintenir un dispositif électronique (13) et lesdits deux connecteurs supplémentaires (706) sont configurés pour fournir un contact entre un émetteur-récepteur radar (402) dans ledit dispositif électronique (13) et lesdites première et deuxième antennes (412, 413).

5. Dispositif de ski ou de type ski (10) selon la revendication 1, dans lequel ledit au moins un trou (602) s'étend sur toute la distance à partir de la zone évidée et à travers le sommet du dispositif de ski ou de type ski (10), et un dispositif électronique (13) est fixé au sommet dudit dispositif de ski ou de type ski (10) si bien qu'il recouvre ledit au moins un trou (602) ; et
dans lequel ledit dispositif électronique (13) comprend :
un émetteur-récepteur radar (402) connecté auxdites première et deuxième antennes (412, 413) sur lesdits deux premiers connecteurs (506) ; et
un microcontrôleur (401) configuré pour commander ledit émetteur-récepteur radar (402) pour transmettre des signaux radar sur ladite première antenne (412) et recevoir des signaux radar réfléchis sur ladite deuxième antenne (413), traiter des signaux radar reçus, et générer une représentation des couches de neige ou de glace sous ledit dispositif de ski ou de type ski (10).

6. Dispositif de ski ou de type ski (10) selon la revendication 5, dans lequel :
un composant d'antenne (500) comporte la première antenne (412) et la deuxième antenne (413), dans lequel ladite première antenne est connectée audit émetteur-récepteur radar (402) et configurée pour recevoir un signal de transmission radar dudit émetteur-récepteur radar (402) et rayonner ledit signal d'émission radar vers le bas dans une ou plusieurs couches de neige ou de glace, et ladite deuxième antenne (413) est configurée pour recevoir un signal radar réfléchi provenant desdites une ou plusieurs couches de neige ou de glace et délivrer ledit signal radar réfléchi audit émetteur-récepteur radar (402).

7. Dispositif de ski ou de type ski (10) selon la revendication 6, lorsqu'il dépend de la revendication 5, dans lequel le dispositif électronique (13) comprend en outre :
une ou plusieurs interfaces de communication radio sélectionnées dans le groupe constitué de : WiFi, signaux de positionnement par satellite, radio à courte portée, communication téléphonique cellulaire, et communication radio à longue portée.

8. Dispositif de ski ou de type ski (10) selon la revendication 7, dans lequel ledit microcontrôleur est en outre configuré pour commander lesdites une ou plusieurs interfaces de radiocommunication afin d'établir une communication avec un service en ligne, télécharger des données dérivées dudit signal radar reçu et télécharger des résultats générés par ledit service en ligne à partir du traitement desdites données téléchargées.

9. Dispositif de ski ou de type ski (10) selon l'une des revendications 8, 7 ou 6, lorsque la revendication 6 dépend de la revendication 5, dans lequel le microcontrôleur est en outre configuré pour générer des caractéristiques de couche de neige estimées sur la base de la représentation générée de paramètres associés aux propriétés des une ou plusieurs couches de neige ou de glace.

10. Dispositif de ski ou de type ski (10) selon la revendication 8, dans lequel le microcontrôleur est en outre configuré pour générer une évaluation de risque sur la base desdites caractéristiques de couche de neige, le dispositif électronique comprenant en outre une interface utilisateur capable d'émettre ou d'afficher un ou plusieurs parmi un son, une lumière, des symboles et un signal de radiodiffusion, indiquant le résultat de ladite évaluation de risque générée.

11. Système informatique connecté à un réseau informatique et configuré pour recevoir des données dérivées d'un signal de radar géologique réfléchi fourni par au moins un ou plusieurs dispositifs de ski ou de type ski (10) selon la revendication 1, dans lequel ledit au moins un trou (602) s'étend sur toute la distance à partir de la zone évidée et à travers le sommet du dispositif de ski ou de type ski (10), et un dispositif électronique (13) est fixé au sommet dudit dispositif de ski ou de type ski (10) si bien qu'il recouvre ledit au moins un trou (602) ; et
dans lequel ledit dispositif électronique (13) comprend :
un émetteur-récepteur radar (402) connecté auxdites première et deuxième antennes (412, 413) sur lesdits deux premiers connecteurs (506) ; et
un microcontrôleur (401) configuré pour commander ledit émetteur-récepteur radar (402) pour transmettre des signaux radar sur ladite première antenne (412) et recevoir des signaux radar réfléchis sur ladite deuxième antenne (413), traiter des signaux radar reçus, et générer une représentation des couches de neige ou de glace sous ledit dispositif de ski ou de type ski (10),
le système étant en outre configuré pour :
générer un ensemble de données à partir des données reçues, ledit ensemble de données comprenant des étiquettes représentant des paramètres d'état de neige ;
effectuer un apprentissage machine sur ledit ensemble de données généré comprenant des étiquettes représentant des paramètres d'état de neige pour générer un modèle entraîné capable de mettre en correspondance des données dérivées d'un signal de radar géologique réfléchi avec au moins l'un d'un modèle desdites une ou plusieurs couches de neige ou de glace et d'une évaluation de risque représentant un risque d'avalanche, l'apprentissage automatique comprenant la réalisation d'un apprentissage automatique non supervisé sur lesdites données reçues dérivées d'un signal de radar géologique réfléchi pour générer une identification de groupes ou de motifs ; et
associer des groupes ou des motifs identifiés à des valeurs de paramètre d'état de neige supposées ; et
transmettre des données représentant le modèle entraîné sur le réseau informatique.

12. Procédé dans un dispositif électronique monté sur ou intégré dans un dispositif de ski ou de type ski (10) selon la revendication 1, dans lequel ledit au moins un trou (602) s'étend sur toute la distance à partir de la zone évidée et à travers le sommet du dispositif de ski ou de type ski (10), et un dispositif électronique (13) est fixé au sommet dudit dispositif de ski ou de type ski (10) si bien qu'il recouvre ledit au moins un trou (602) ; et
dans lequel ledit composant électronique comprend :
un émetteur-récepteur radar (402) connecté auxdites première et deuxième antennes (412, 413) sur lesdits deux premiers connecteurs (506) ; et
un microcontrôleur (401) configuré pour commander ledit émetteur-récepteur radar (402) pour transmettre des signaux radar sur ladite première antenne (412) et recevoir des signaux radar réfléchis sur ladite deuxième antenne (413), traiter des signaux radar reçus, et générer une représentation des couches de neige ou de glace sous ledit dispositif de ski ou de type ski (10), le procédé comprenant les étapes consistant à :
la transmission d'un signal de radar géologique vers le bas dans une ou plusieurs couches de neige ou de glace ;
la réception d'un signal de radar géologique réfléchi provenant desdites une ou plusieurs couches de neige ou de glace ;
la conversion dudit signal de radar géologique réfléchi en un signal numérique; et
la fourniture dudit signal numérique en tant qu'entrée à une fonction qui délivre une représentation desdites une ou plusieurs couches de neige ou de glace en tant que sortie.

13. Procédé selon la revendication 12, comprenant en outre :
l'utilisation d'une interface de communication radio dudit dispositif électronique (13) pour transmettre des données dérivées dudit signal de radar géologique réfléchi à un service en ligne distant ; et
la réception en réponse à partir dudit service en ligne distant d'au moins l'une d'une représentation desdites une ou plusieurs couches de neige ou de glace, et d'une version mise à jour de ladite fonction qui délivre une représentation desdites une ou plusieurs couches de neige ou de glace comme sortie lors de la réception de données dérivées d'un radar géologique comme entrée.

14. Procédé dans un système informatique connecté à un réseau informatique, comprenant :
la réception de données dérivées d'un signal de radar géologique réfléchi fourni par au moins un ou plusieurs dispositifs de ski ou de type ski (10) selon la revendication 1, dans lequel ledit au moins un trou (602) s'étend sur toute la distance à partir de la zone évidée et à travers le sommet du dispositif de ski ou de type ski (10), et un dispositif électronique (13) est fixé au sommet dudit dispositif de ski ou de type ski (10) si bien qu'il recouvre ledit au moins un trou (602) ; et
dans lequel ledit dispositif électronique (13) comprend :
un émetteur-récepteur radar (402) connecté auxdites première et deuxième antennes (412, 413) sur lesdits deux premiers connecteurs (506) ; et
un microcontrôleur (401) configuré pour commander ledit émetteur-récepteur radar (402) pour transmettre des signaux radar sur ladite première antenne (412) et recevoir des signaux radar réfléchis sur ladite deuxième antenne (413), traiter des signaux radar reçus, et générer une représentation des couches de neige ou de glace sous ledit dispositif de ski ou de type ski (10),
le procédé comprenant les étapes consistant à :
générer un ensemble de données à partir des données reçues, ledit ensemble de données comprenant des étiquettes représentant des paramètres d'état de neige ;
effectuer un apprentissage machine sur ledit ensemble de données généré comprenant des étiquettes représentant des paramètres d'état de neige pour générer un modèle entraîné capable de mettre en correspondance des données dérivées d'un signal de radar géologique réfléchi avec au moins l'un d'un modèle desdites une ou plusieurs couches de neige ou de glace et d'une évaluation de risque représentant un risque d'avalanche ; et
transmettre des données représentant le modèle entraîné sur le réseau informatique.

15. Procédé selon la revendication 14, comprenant en outre :
- obtenir des données supplémentaires à partir d'un ou de plusieurs référentiels en ligne et utiliser lesdites données supplémentaires pour affiner ledit modèle entraîné, lesdites données supplémentaires étant choisies dans un groupe consistant en : des données météorologiques actuelles dans une zone, des données météorologiques historiques provenant d'une zone, une température actuelle dans une zone, une température historique dans une zone, des données historiques représentant une quantité d'ensoleillement dans une zone, une humidité d'air actuelle dans une zone, une humidité d'air historique dans une zone, et des informations d'avalanche historiques relatives à une zone.
